# EUROPÄISCHE PATENTSCHRIFT

(11) **EP 2 989 471 B1**
(45) Veröffentlichungstag und Bekanntmachung des Hinweises auf die Patenterteilung: **01.04.2020**
(21) Anmeldenummer: 14719319.7
(22) Anmeldetag: 24.04.2014
(51) Int. Cl.: G01P 5/26

(54) **VORRICHTUNG UND VERFAHREN ZUR OPTISCHEN ERFASSUNG VON FLIESSBEWEGUNGEN IN FLÜSSIGEN UND/ODER GASFÖRMIGEN MEDIEN**
APPARATUS AND METHOD FOR OPTICALLY DETECTING FLOW MOVEMENTS IN LIQUID AND/OR GASEOUS MEDIA
DISPOSITIF ET PROCÉDÉ DE DÉTECTION OPTIQUE DE MOUVEMENTS D'ÉCOULEMENT DANS DES MILIEUX LIQUIDES ET/OU GAZEUX

(30) Priorität: 24.04.2013 WO PCT/EP2013/058452
(43) Veröffentlichungstag der Anmeldung: 02.03.2016
(73) Patentinhaber: Schöttler, Markus, 76530 Baden-Baden (DE)
(72) Erfinder: Schöttler, Markus, 76530 Baden-Baden (DE)
(74) Vertreter: dompatent von Kreisler Selting Werner - Partnerschaft von Patent- und Rechtsanwälten mbB
(86) Internationale Anmeldenummer: PCT/EP2014/058343
(87) Internationale Veröffentlichungsnummer: WO 2014/174014

(56) Entgegenhaltungen:
- EP-A2- 0 291 708
- DE-A1- 19 957 808
- DE-U1-202011 110 039
- US-A- 5 148 229
- US-A- 5 561 515
- Ben Ovryn ET AL: "Coherent forward scattering particle-image velocimetry: application of Poisson's spot for velocity measurements in fluids", Proceedings Optical Diagnostics of Living Cells II, vol. 2005, 2 December 1993 (1993-12-02), pages 338-348, XP055462073, US ISSN: 0277-786X, DOI: 10.1117/12.163718 ISBN: 978-1-5106-1324-9

## Beschreibung

Die Erfindung betrifft eine Vorrichtung und ein Verfahren zur optischen Erfassung von Fließbewegungen in flüssigen und/oder gasförmigen Medien. Neben dem Einsatzgebiet der Vermessung beispielsweise von Grundwasserfließbewegungen in Grundwasseraufschlüssen im Allgemeinen lässt sich die Erfindung insbesondere zur Untersuchung der Grundwasserfließbewegung an Dämmen, Tunneln oder bei der Planung von Vereisungsmaßnahmen für einen Tunnelvortrieb im Schutz eines aufgebauten Frostkörpers, zur Datenerhebung von Grundwasserfließmodellen und zur Plausibilitätsprüfung von Fließmodellen, zur Beweissicherung bei Sanierungsmaßnahmen und von Grundwassereinzugsreichweiten bei der Wasserwirtschaft und zur Untersuchung für thermische Aquifier-Speicher sowie zur Überwachung der Strömung und Schwebstofffracht von gasförmigen Medien einsetzen.

Die Kenntnis über die Grundwasserfließrichtung und -geschwindigkeit ist für die Planung und die Beweissicherung bei einer Vielzahl von Projekten im Umwelt- und Grundwasserschutz, der Trinkwassergewinnung, des Tief- und Tunnelbaus sowie der Geothermie von großer Bedeutung. In der Bundesrepublik Deutschland wird etwa 64 % der Trinkwasserversorgung vom Grundwasser abgedeckt. Grundwasser ist somit ein primäres Schutzgut. Die immer umfangreichere Nutzung des Grundwassers, z.B. zur Wasserversorgung oder aber auch als Medium für die geothermische Energiegewinnung, erfordern zunehmend genauere Kenntnisse des lokalen Fließverhaltens. Auch vom Gesetzgeber werden genauere Erkundungen insbesondere unter dem Aspekt der Reinhaltung und nachhaltigen Bewirtschaftung gefordert (EU-Wasserrahmenrichtlinie). In der Bundesrepublik Deutschland sind alle Eingriffe in das Grundwasser - auch das Einbringen von Substanzen (sogenannte Tracer) zur Messung physikalischer Größen des Grundwassers - durch das Wasserhaushaltsgesetz (WHG) geregelt und damit genehmigungspflichtig.

Grundwasser ist stets in Bewegung. Von dem Ort der Grundwasserneubildung (Versickerung von Niederschlägen) bis zum Austritt in eine Quellschüttung bewegt sich das Grundwasser durch Sedimentkörper und -strukturen des Untergrundes. Die Fließrichtung und -geschwindigkeit werden dabei von den meist nicht näher bekannten Strukturen und Durchlässigkeiten des Untergrundes, dem hydraulischen Druckgefälle usw. vorgegeben. Da diese Parameter wechselhaft sind, bewegt sich das Grundwasser häufig nicht auf direktem Weg zu den Austrittsstellen.

Im Vorfeld von Projekten, bei denen ein Eingriff in das Grundwasser erfolgt, müssen an den betroffenen Standorten die lokalen Grundwasserfließverhältnisse über vorab installierte Brunnenpegel geklärt werden. Konventionell wird dazu die Höhendifferenz der an benachbarten Pegeln gemessenen Grundwasserspiegelhöhe genutzt, um die Richtung des Fließgefälles zu ermitteln.

Wie sich aus dem Vorstehenden ergibt, kann also die Grundwasserfließbewegung konventionell durch indirekte Messungen ermittelt werden, d.h. die Grundwasserfließrichtung und -geschwindigkeit werden über die Messung der Grundwasserspiegelhöhen benachbarter Brunnenpegel und anhand des Spiegelgefälles und der Durchlässigkeit des Untergrundes ermittelt. Diese indirekte Messung liefert jedoch nicht immer die erforderliche Informationsgüte und Auflösung, und zwar im Fall von nicht korrelierbaren Pegelständen, bei weitständigen Pegelnetzen, bei unzureichender Pegelanzahl oder bei flachen Grundwassergefällen. Der Bau von Brunnenpegeln ist kostenintensiv, auch können diese nicht immer in der erforderlichen Anzahl und/oder an den erforderlichen Stellen errichtet werden (was z.B. in Stadtgebieten oder Industriestandorten gilt), um die gewünschten Informationen zu erhalten.

Neben der indirekten Messung der Grundwasserfließbewegungen können diese auch mittels "In-Situ"- oder "Einbohrloch-Messverfahren" ermittelt werden. Hierbei wird in einzelnen Grundwasseraufschlüssen wie Brunnenpegeln die Grundwasserfließbewegung direkt gemessen, wobei nur ein Brunnenpegel erforderlich ist, um diese Daten zu erheben. Diese direkte Messung der Grundwasserfließrichtung und -geschwindigkeit erfolgt in diskreten Tiefen von radial durchströmten Pegelrohrabschnitten.

Gegenüber indirekten Messungen haben direkte Fließbewegungsmessungen in einzelnen Pegeln die folgenden Vor- und Nachteile:

### Vorteile:

- Es ist nur ein Brunnenpegel erforderlich, um die lokale Grundwasser-Fließsituation zu ermitteln.
- Für die Messung können vorhandene Brunnenpegel genutzt und weitere Brunnenpegel eingespart werden.
- Die Grundwasserfließbewegung kann in unterschiedlichen Tiefen des Grundwasserleiters gemessen werden, dies liefert ein detailliertes Bild der räumlichen Fließverhältnisse im Grundwasserleiter.
- Der Informationsgewinn ist unabhängig von/ergänzend zu Grundwasserstandsmessungen und Pumpversuchen.

### Nachteile:

- Fast alle direkt im Brunnenraum messenden Verfahren sind auf Einzelmessungen begrenzt. Sie liefern somit keine hinreichende Datenmenge für eine statistische Bewertung. Die Ergebnisse zeigen teilweise eine hohe Varianz und sind somit nicht immer belastbar.
- Die Messresultate spiegeln die Fließsituation am unmittelbaren Standort des Brunnenpegels wieder und sind nur mit Kenntnis der lithologischen Verhältnisse auf das weitere Umfeld übertragbar.
- Änderungen des Fließverhaltens infolge von hydraulischen Ereignissen können meist nicht "online" erfasst werden.
- Es sind Voruntersuchungen erforderlich (Pegelzustand/Ausbau), um die erforderlichen Messbedingungen zu überprüfen.
- Verfahren, die das Einbringen von künstlichen Tracern erfordern, sind auf Grund eines hohen Rüst- und Messzeitaufwands meist unwirtschaftlich und werden nur dann eingesetzt, wenn mit konventionellen Vorgehensweisen keine Ergebnisse erzielt werden können.

Auf Grund der mehrheitlichen Nachteile gegenüber konventionellen Verfahren ist der Einsatz von Einbohrlochverfahren derzeit sehr begrenzt.

Die radiale Grundwasser-Durchflussgeschwindigkeit in Brunnenpegeln liegt im Bereich zwischen 1 cm/s und 1 cm/Tag (fünf Größenordnungen). Zu Messungen der überwiegend sehr geringen Fließbewegung ist die Zugabe von Strömungsmarkern erforderlich. Hierzu werden in den Brunnenpegel oder den Brunnenringraum z.B. Elektrolyte, Farbstoffe oder Radioisotope eingebracht oder Marker künstlich erzeugt, z.B. Hitzepulse. Viele direkte Verfahren können auf Grund unterschiedlicher Eigenschaften der eingesetzten Marker nur einen begrenzten Geschwindigkeitsbereich abbilden. Neuere Verfahren, wie das PHREALOG-Messverfahren, das "colloidal borescope" oder die "Dunkelfeld-Sonde" nutzen die im Grundwasser enthaltenen natürlichen Schwebstoffe als Marker. Da diese suspendierend mit der Durchflussbewegung mitgeführt werden, bildet deren Drift die Fließbewegung ab. Schwebstoffe werden beleuchtet und dabei optisch per CCD-Kamera erfasst. Die Fließbewegung wird dann rechnergestützt per PIV (Particle Image Velocimetry) über den Drift der Schwebstoffe berechnet.

Die optische Messung der Fließbewegung mit Hilfe von natürlich vorhandenen Strömungsmarkern hat gegenüber Verfahren, welche künstliche Marker verwenden, entscheidende Vorteile:
a) Permanent vorhandene Schwebstoffe ermöglichen eine kontinuierliche, automatisierbare Fließmessung mit beliebiger Messdauer. Dies ermöglicht ein zeitlich unbegrenztes und hoch aufgelöstes Monitoring von Fließbewegungen in Brunnen und die Dokumentation von Fließänderungen im Zeitverlauf. Mit Verfahren, die den Einsatz künstlicher Marker erfordern, ist ein automatisches Monitoring nicht bzw. nur mit hohem Aufwand und hohen Kosten möglich.
b) Da im Grundwasser immer Feinschwebstoffe enthalten sind, die advektiv mit der Strömung mitgeführt werden, ist keine künstliche Markierung erforderlich, daher
   - ist keine Einsatzgenehmigung nach WHG erforderlich,
   - werden Messfehlerquellen reduziert (da kein physiko-chemischer Eingriff erfolgt),
   - ist keine Vorort-Kalibration erforderlich,
   - ist der Einsatzaufwand gering.
c) Die einfache Handhabung und der geringe Einsatzaufwand reduzieren die Rüstzeit und ermöglichen einen wirtschaftlichen Einsatz.
d) Da keine sensorischen Elemente im Messmedium liegen, ist die Messtechnik in chemisch aggressiver Umgebung hochrobust.
e) Es wird eine hohe Datenmenge gewonnen, was die Evaluierung verbessert und somit die Stichhaltigkeit der Messergebnisse erhöht.
f) Es kann ein breites Geschwindigkeitsspektrum von 10E-2m/s bis 10E-7m/s (1 cm/s bis 1 cm/Tag) abgebildet werden.
g) Nach Einbau der Messapparatur kann die hydraulische Stabilisierung dokumentiert werden.

PHREALOG entwickelte ab 1992 ein Messverfahren (GFV) zur optischen Messung der Grundwasser-Fließbewegung in Pegeln. Die Messtechnik wird von PHREALOG kommerziell seit 1999 eingesetzt (DE 42 30 919 A1 und DE 199 45 852 A1).

Ein grundlegendes Unterscheidungsmerkmal gegenüber den bekannten, vergleichbaren optischen Verfahren (z.B. colloidal borescope, Dunkelfeld-Sonde) ist die Ausleuchtung des Messfelds per Laser.

US-A-4 206 999 beschreibt ein Verfahren, mit dem Fließbewegungen optisch anhand der Drift von mikroskopischen Partikeln per Photomultiplier erfasst werden. Hierbei wird die betrachtete Bildebene mittels eines seitlich auf die Bildebene auftreffenden Laserstrahls ausgeleuchtet. Der Laserstrahl wird dabei unterschiedlich geformt. Zur Signalverarbeitung ist dem Photomultiplier ist ein Pulsweiten-Analysator nachgeschaltet.

US-A-4 391 137 beschreibt ein Verfahren, mit dem Fließbewegungen in Brunnen mittels künstlich erzeugter Temperaturanomalien ermittelt werden können, wobei Fließrichtung als auch Geschwindigkeit erfasst werden. Dazu wird eine Anordnung von Thermistoren in einer äquidistanten Entfernung zu einem Heizelement auf einer Kreisebene angeordnet, wobei das Heizelement mittig in der Kreisebene positioniert ist. Thermistoren und Heizelement werden in einem formbaren, mit porösem Medium bzw. Schüttgut, wie z.B. Sand oder Glasperlen, gefüllten Behälter eingebaut. Diese Anordnung wird in das Brunnenrohr eingefahren und in einer definierten Messtiefe fixiert. Das formbare Behältnis legt sich dabei an die Brunneninnenwandung an, so dass der horizontale Grundwasserfluss das poröse Medium durchströmt. Das poröse Medium hat die Aufgabe, eine gleichförmige laminare Durchströmung in dem Messraum zu gewährleisten und thermische Konvektion zu unterdrücken. Nun wird am Heizelement ein Wärmeimpuls gesetzt, der konform mit der Durchströmung in dem porösen Medium zu den umliegenden Thermistoren transportiert wird. Aus der Zeitdauer zwischen Erzeugung des Hitzepulses und Ankunft an einem der Thermistoren wird das Maß der Durchflussgeschwindigkeit ermittelt, wobei die Richtung anhand der radialen Lage des Thermistors, an dem der Hitzepuls antrifft, ermittelt wird.

US-4 396 943 beschreibt ein Verfahren, mit dem Fließbewegungen in Rohren anhand der Drift von Partikeln mittels einer endoskopischen Vorrichtung erfasst werden.

In US-A-4 963 019 wird ein optisches Verfahren beschrieben, das im Wesentlichen dem "colloidal borescope"-Verfahren entspricht, jedoch mit einem Photomultiplier arbeitet. Hinweise auf die Verwendung von Kameras bzw. entsprechenden Optiken finden sich nicht.

In US-A-5 265 477 werden die Strömungseigenschaften eines Fluids bestimmt, indem ein Elektrolyt-Impuls an einem hochlokalisierten Punkt innerhalb des Fluids eingeführt wird, ohne das Strömungsfeld des Fluids oder die Form des Impulses zu stören, und anschließend die Spannung oder die Leitfähigkeit um diesen Punkt herum abgebildet wird, um die Geschwindigkeit und die Richtung der Fluidströmung zu bestimmen.

US-A-5 339 694 offenbart eine Sonde zur Bestimmung der physikalischen Größen von Grundwasser. Die Sonde ist zylinderförmig aufgebaut. Auf ihrer Mantelfläche sind gleichmäßig auf ihrem Umfang sowie parallel zum Verlauf ihrer Längsmittenachse Sensoren angeordnet, welche die elektrischen Widerstandswerte von durch eine Tracerflüssigkeit beeinflusstem, in unmittelbarer Nähe der Sonde befindlichem Grundwasser messen. Hier wird als Tracerflüssigkeit die Verwendung eines Salzwassers vorgeschlagen, das durch eine Membran in das Grundwasser diffundieren muss, welches die leitfähige Flüssigkeit transportiert und ein für die Sensoren erfassbares leitfähiges Messfeld erzeugt. Erstreckung, Form und Bewegungsgröße des Feldes werden durch die Sensoren gemessen. Es ist mit diesem Gerät auch möglich, vertikale und horizontale Fließbewegungen zu messen und damit die Form des Feldes und die Fließgeschwindigkeit sowie -richtung des Grundwassers zu bestimmen. Die Sonde sowie das Verfahren zu ihrer Verwendung weisen den Nachteil auf, dass sie in wasserführenden Bohrlöchern stationär, d.h. fest installiert werden müssen, weil sie nicht über Halte- bzw. Zentriermittel wie Packer verfügen. Der Messvorgang kann großflächig vorgenommen werden, jedoch ist die Messbarkeit der sich im Grundwasser bewegenden leitfähigen Flüssigkeit durch die Sensoren nur unzureichend gegeben. Die Vorrichtung gewährleistet nur Möglichkeiten zur Messung der elektrischen Leitfähigkeit, jedoch keine Kombination mit anderen Messverfahren.

US-A-5 796 679 beschreibt ein Verfahren, mit dem Fließbewegungen in Brunnen akustisch mittels modulierbaren Tonfrequenzen bei Nutzung des Doppler-Verfahrens ermittelt werden können.

US-B-6 227 045 offenbart eine Sonde zum Überwachen der Geschwindigkeit und Richtung der Grundwasserströmungs-Sickerung, welche eine elektrische Heizvorrichtung und mehrere Temperatursensoren aufweist, die äquidistant von der Heizvorrichtung angeordnet sind. Die Sonde mit der Heizvorrichtung und den Temperatursensoren wird in einen Überwachungsschacht eingeführt und derart positioniert, dass sie in das Grundwasser eingetaucht ist. Der Heizvorrichtung wird Energie zugeführt, und die Temperatur-Reaktion an den Temperatursensoren wird gemessen und aufgezeichnet. Aus der gemessenen Temperatur-Reaktion werden die Grundwasser-Strömungsgeschwindigkeit und -richtung berechnet, und diese werden aufgezeichnet. Die Temperatursensoren können Widerstandstemperaturdetektoren, Thermoelemente oder andere Temperaturdetektionsvorrichtungen des Standes der Technik sein.

US-B-6 393 925 beschreibt ein Verfahren, mit dem Fließbewegungen in Brunnen mittels künstlich erzeugter Temperaturanomalien ermittelt werden können, wobei Fließrichtung als auch -geschwindigkeit erfasst werden.

In DE-B-101 49 024 ist ein Verfahren zur Bestimmung der physikalischen Größen des in einem Bohrloch anstehenden Grundwassers durch Einführen einer wässrigen, markierten Lösung mit vom Grundwasser abweichender Leitfähigkeit in einem vorbestimmten Raum und eine Sonde zur Durchführung des Verfahrens beschrieben. Das Messprinzip beruht auf der Erzeugung und Beobachtung des Verhaltens von künstlich erzeugten Anomalien der Leitfähigkeit und der Temperatur. Während des Messvorgangs werden die zeitabhängigen, richtungsspezifischen Veränderungen dieser beiden Parameter mit angepassten geoelektrischen Anordnungen und Temperatursensoren ermittelt. Durch die zeitlich parallel ablaufenden Messungen wird eine Erhöhung der Genauigkeit erreicht und die Erweiterung des Einsatzbereiches ermöglicht. Das Einbohrlochsystem ermöglicht die Messung langsamer Grundwasserströmungsgeschwindigkeiten im Bereich ab größer 1 m/d. Dieses Ziel wurde mit der Entwicklung des Tracerringraumverfahrens erreicht. Damit werden Störungen des natürlichen Grundwasserströmungsfeldes vermieden und gleichzeitig eine radial gleichmäßige Verteilung des Tracers als Startzustand für die Messungen gewährleistet. Die bei bekannten Messverfahren infolge des Tracervorgangs auftretende Volumenzunahme und daraus resultierende horizontale und vertikale Geschwindigkeitskomponenten werden mit diesem Prinzip minimiert. Eine Beeinflussung der hydraulischen Bedingungen im Untersuchungsbereich durch den Tracervorgang wird verhindert. Dies bildet die entscheidende Grundlage für die Messung langsamer Grundwasserbewegungen. Hinzu kommt, dass durch die konstruktive Gestaltung der Sonde und die angewendeten Messverfahren der Einsatz geringer Tracermengen (< 2000 ml) ermöglicht wird.

Die DE-A-42 30 919 stellt ein Einzelbohrlochverfahren und eine Vorrichtung zur gleichzeitigen Ermittlung der Grundwasserströmungsrichtung und -geschwindigkeit vor. Das Verfahren eröffnet Möglichkeiten, das nachteilige Messen der Strömungskennwerte über eine bestimmte Zeiteinheit durch ein Verfahren abzulösen. Das Herstellen einer radial ausgebildeten Tracerdiffusion sowie auch das Messen der Zeitspanne des Tracertransports zwischen seiner Eingabe und der Detektion wirken sich bei geringen Strömungsgeschwindigkeiten nachteilig auf die Messzeiten aus. Jedoch sind die Gegebenheiten des Messens der Strömungsgeschwindigkeit und -richtung des Grundwassers in Bohrlöchern weitestgehend auf die genaue Messung auch kleinster Strömungsgeschwindigkeiten angewiesen. Das bekannte Verfahren konzentriert sich deshalb auf die vorhandene Grundwasserströmung mit kleinsten Geschwindigkeiten und löst die gestellte Aufgabe dadurch, dass im Messabschnitt eines Bohrlochs eine horizontale ausgerichtete Objektebene ausgeleuchtet und mittels einer Optik auf die Bildebene eines Videosensormoduls fokussiert und als reale Bildgröße produziert bewertbar gemacht wird. Die Lösung gemäß DE-A-42 30 919 benötigt zur Darstellung der zu ermittelnden Werte des Grundwasserverhaltens einen Tracer in Form fluoreszierender Partikel, die in der Flüssigkeit suspendiert, die Strömung und ihre Richtung sichtbar werden lassen. Die durch den Strömungstransport bedingte Standortabweichung des Tracers wird als Wanderung virtueller Lichtquellen auf der Bildebene bzw. der Kamerasensorfläche fortlaufend registriert und per nachgeschalteter Bildverarbeitung direkt ausgewertet. Die Einrichtung weist allgemein eine zylindrische Form auf. An ihren oberen und unteren Zylinderenden sind Packer angeordnet, die zwischen sich einen ringförmigen, durch die Zylindermantelfläche sowie die Bohrungswand begrenzten Hohlzylinder ausbilden, in dem die Einrichtung zur visuellen und optischen Messung der Eigenschaften des Grundwassers erfolgt. Die Lösung verwendet in ihren technischen Konzeptionen des Verfahrens sowie des apparativen Aufbaus der Vorrichtung genau arbeitende Apparaturen, jedoch ist hier eine Bewertung von rechenbaren Informationen aus schnell verfügbaren Daten nicht zu erhalten.

In DE 199 45 852 A1 weist eine Vorrichtung zur Messung von Strömungen in einem Bohrbrunnen obere und untere Abschlusselemente auf, die im Abstand voneinander angeordnet sind und zwischen denen ein Messabschnitt gebildet ist, der im Wesentlichen frei durchströmt werden kann, wobei die Abschlusselemente Mittel zum Abdichten des Bohrbrunnens aufweisen, so dass im Messabschnitt keine vertikalen Strömungen auftreten. Die Vorrichtung ist weiterhin versehen mit einer Lichtquelle zum Ausleuchten des Messbereichs und mit einem Bilderfassungselement, welches das Bild eines Messbereichs innerhalb des Messabschnitts erfasst. Zwischen dem Bilderfassungselement und dem zu beobachtenden Bereich ist mindestens eine rohrförmige optische Vorrichtung angeordnet, die mit ihrem freien Ende in den Messabschnitt bis unmittelbar vor den Messbereich hineinragt und die eine solche Gestalt und solche Abmessungen hat, dass die Strömung im Wesentlichen unbeeinflusst ist.

Bei dem oben bereits genannten Messverfahren unter Verwendung der "Dunkelfeld-Sonde" wird die horizontale Fließrichtung des Grundwassers mittels Kamera nach dem Dunkelfeldprinzip ohne Einbringung künstlicher Tracer gemessen. Bei der Dunkelfeldtechnik wird das von einer Lichtquelle in Richtung Kameraobjektiv gestrahlte Licht durch sog. Lichtfallen ausgeblendet, so dass im Idealfall kein Licht ans Objektiv gelangt. An feinsten Partikeln im Grundwasser, deren Größe weit unter der optischen Auflösung der Kamera liegt, wird das Licht gestreut und gebeugt und bildet somit die Positionen dieser Partikel im Kamerabild ab. Die Bilder werden bei tiefenstationärer Messsonde auf Video aufgezeichnet und die Richtung der Partikelbewegung durch eine spezielle Software statistisch ausgewertet und sichtbar gemacht. Die "Dunkelfeldsonde" ist 1998 aus einer Entwicklung der Universität Leoben, Österreich; in Zusammenarbeit mit der ehem. Fa. GECO Umwelttechnik, jetzt FUGRO Austria GmbH (www.fugroaustria.at) hervorgegangen und wird kommerziell angeboten. Vom Verfahren her ähnelt sie dem "colloidal borescope" bzw. besteht aus einer konventionellen Brunneninspektionskamera mit anderer Optik und unterhalb der Sonde aufgesetzter Lichtquelle in Richtung zur Kamera.

Das ebenfalls oben bereits erwähnte Verfahren "colloidal borescope" wurde in den frühen 1990er Jahren an dem Oak Ridge National Laboratory (Kearl, P.M. et al. (1992): "Suggested Modifications to Groundwater Sampling procedures Based on Observations from the Colloidal Borescope"; Groundwater Monitoring & Remediation (GWMR), Spring 1992 National Ground Water Association , GROUND WATER MONITORING REVIEW; V12 N2; P155-161; Kearl, P.M. (1997): "Observation of particle movement in a monitoring well using the colloidal borescope"- Journal of Hydrology 200 (1997) 323-344, Elsevier) entwickelt. Das im Zusammenhang mit dem "Oak-Ridge"-System beschriebene Instrument weist eine starke Ähnlichkeit zu einer früheren Vorrichtung auf, die Gegenstand von US-A-4 963 019 war, wobei die Hauptunterschiede in dem Typ der Beleuchtung (Laser gegenüber Lampe) und der Bilderzeugungsvorrichtung ("Optiram" gegenüber CCD-Kamera für die Versionen von Foster und Fyda bzw. von Kearl) liegen. Das Tool besteht aus einer nach unten gerichteten Kamera mit einem Mikroskop-Objektiv, einer Lichtquelle, die auf die Kamera hin gerichtet ist, wobei sie einen "Hellfeld"-Effekt erzeugt, einem Magnetometer zum Detektieren der Tool-Ausrichtung, Haltekabeln, und/oder einem Betracher-/Aufzeichnungspaket am Kopf des Schachts. Sobald das Tool bis zu der Target-Tiefe hin abgesenkt worden ist, werden Video-Aufzeichnungen gemacht, und Partikel in der mikroskopischen Größenordnung, deren Größe im Bereich von 2-10 µm liegt, werden als dunkle Objekte detektiert; falls eine nahezu laminare Strömung detektiert wird (die Partikel bleiben während eines Großteils oder der Gesamtheit ihrer Durchquerung des Betrachtungsfelds innerhalb der recht dünnen Fokus-Ebene), können zahlreiche Partikel zu einer einzigen Ablesung beitragen. Dann wird Computer-Software verwendet, um die Partikel zu detektieren, sie zwischen aufeinanderfolgenden Einzelbildern anzupassen, und ihre Geschwindigkeit und Richtung zu berechnen (Kearl und Roemer 1998). Dieses Magnetometer-Ausgangssignal wird an jeder Messtiefenposition aufgezeichnet, um Azimuth-Schätzwerte zu korrigieren, da ein Verdrehen des Tools unvermeidbar ist, wenn flexible Kabel zur Aufhängung des Instruments verwendet werden.

Ferner ist es bekannt, mit Hilfe eines sogenannten "scanning colloidal borescope flowmeter" (SCBFM) zu arbeiten, welches entwickelt wurde, um horizontale Grundwasserströmungsrichtungen und -geschwindigkeiten zu evaluieren. Bei dem SCBFM werden eine ladungsgekoppelte Vorrichtung (CCD), ein Magnetometer, eine Lichtquelle und ein ferngesteuerter Linsenmechanismus mit variablem Brennpunkt verwendet, um in der mikroskopischen Größenordnung vorliegende Partikel optisch zu verfolgen. Natürlich auftretende Kolloide bewegen sich advektiv mit der nativen Grundwasserströmung. Durch Aufzeichnen der Ausgangssignale der CCD-Vorrichtung und durch Verwendung hochentwickelter Partikelverfolgungs-Computersoftware können die Kompassrichtung und die advektive Geschwindigkeit einer horizontalen Grundwasserströmung in einem Grundwasseraufschluss (Brunnenpegel, Bohrung) ausgewertet werden. Das Abtast-Feature ermöglicht die Auswertung eines etwa 50 cm hohen Intervalls im Messvolumen. Das Abtast-Feature ermöglicht eine dreidimensionale Auswertung der Strömung, so dass wirbelnde, nichtrepräsentative Strömungszellen identifiziert und "schnelle Fließpfade" detektiert und charakterisiert werden können. Der Strömungsmesser mit Abtast-Kolloidal-Boroskop (Scanning Colloidal Borescope Flow Meter SCBFM) des Lawrence Livermore National Laboratory (LLNL) fügt dem Grundkonzept der "Kolloidal-Boroskop"-Instrumente von Kearl und Foster und von Fyda ein weiteres Merkmal hinzu: die Brennebene ist über eine Distanz von fast 1/2 m hinweg kontinuierlich einstellbar, so dass, nachdem das Tool in einer Target-Tiefe platziert worden ist, in dem Höhenintervall des Messabschnitts ein Bereich der Bild-"Ebenen" optisch durchfahren und visualisiert werden kann, ohne dass das Tool bewegt wird. Es wird angenommen, dass dies eine höhere Flexibilität beim Lokalisieren bevorzugter Durchflussbewegungen und Partikel führender Bereiche für das Datensammeln ermöglicht, ohne dass Turbulenzen verursacht werden, wenn das Tool neupositioniert wird. Da das SCBFM den Partikel-Transport im das Bohrloch direkt visualisiert, erfolgt das Schätzen der Geschwindigkeiten lediglich unter Verwendung einfacher Kalibrierungen des Kameraobjektivs. Das Tool unterliegt jedoch den gleichen Beeinflussungen wie andere im Bohrloch platzierter Vorrichtungen dahingehend, dass das Vorhandensein des Sandpacks und Sieben unvermeidlicherweise die Strömungslinien nahe dem Schacht verändern. Kearl (1997) stellte fest, dass mit dem Colloidal-Boroskop-gemessenen Fließgeschwindigkeiten um einen Faktor von eins bis vier reduziert werden sollten, um aus den Messergebnissen die Fluidgeschwindigkeiten im umgebenden Grundwasserleiter abzuleiten, und dass die beobachteten Geschwindigkeiten eine Obergrenze für echte Aquifer-Strömungsraten repräsentieren (siehe auch Scott,J. et al. (2006): "Simulations to Verify Horizontal Flow Measurements from a Borehole Flowmeter" GROUND WATER Vol. 44, No. 3; May-June 2006; pages 394-405).

Schließlich ist auch die Verwendung eines "In Situ Permeable Flow Sensors" (ISPFS) zur direkten Messung der Richtung und Geschwindigkeit von Grundwasser an im Wesentlichen einem einzelnen Punkt in einem nicht konsolidierten, gesättigten Bodensediment bekannt (siehe auch Ballard,S. (1996): "The in situ permeable Flow velocity meter", GROND WATER Vol. 34, No.2; pages 231-240). Nachdem der ISPFS (In-Situ Permeable Flow Sensor) permanent im Boden installiert ist, werden die 30 kalibrierten Temperatursensoren an seiner Oberfläche aktiviert, wobei ein zeitlich und räumlich gleichförmiger Wärmefluss um die Sonde herum hergestellt wird. Eine sich an dem ISPFS-Sensor vorbeibewegende Grundwasserströmung wird durch eine Veränderung der Temperaturverteilung um die Oberfläche des Tools herum angezeigt, da ein Anteil der von der Sonde ausgehenden Wärme durch das an dem ISPFS-Sensor vorbeiströmende Grundwasser um das Tool herumbewegt wird. Die stromabwärts gewandte Seite der Sonde wird im Vergleich zu der angeströmten Seite relativ warm. Die Richtung und die Größe der Strömung werden aus der gemessenen Temperaturverteilung an der Oberfläche der Sonde berechnet. Der ISPFS-Sensor liefert eindeutige Information, insbesondere eine Punktschätzung der Richtung und Geschwindigkeit der Grundwasserströmung in einem Maßstab von ungefähr einem Kubikmeter. Unter der Voraussetzung einer in Richtung und Geschwindigkeit gleichförmigen Fließbewegung können mit den ISPFS-Sensoren präzise Messung von Grundwasser-Fließgeschwindigkeiten im Bereich von 1x10E-5m/s bis 5x10E-8m/s verwendet werden. Der ISPFS-Sensor lieferte eindeutige Information (Punktschätzungen der Grundwasserströmungsvektoren) an den oben genannten Demonstrationsstellen sowohl unter natürlichen als auch unter gestörten (d.h. den während der Sanierung herrschenden) Bedingungen. Eine Messung der Grundwasserströmung im kleinen Maßstab kann kritisch für das Optimieren des Sanierungs-Designs oder das Entwickeln eines stellenbezogenen konzeptuellen Modells sein. ISPFS-Sensoren liefern über eine längere Zeitperiode hinweg Information bei extrem niedrigem Kostenaufwand. Nachdem die Sensoren installiert worden sind, wird die Datenerhebung über ein automatisches System vorgenommen.

Da insbesondere bei geringen Fließgeschwindigkeiten die Grundwasser-Fließbewegung aufgrund hydraulischer Druckschwankungen im Zeitverlauf variabel in Richtung und Geschwindigkeit ist, erfolgt bei geringen Fließbewegungen eine diffuse/disperse Verteilung der Temperaturmarkierung, so dass dann eine akkurate Auswertung nicht gegeben ist.

Aufgrund eines permanenten Einbaus der Sonde in einer Bohrung ist nach Abschluss der Untersuchung eine Bergung der Sonde mit hohem Aufwand verbunden. Daher wird auch ein Verlust der Sonden insofern in Kauf genommen, als diese im Erdreich verbleiben, was ökologisch jedoch nicht vertretbar ist.

Aus EP-A-0 291 708 ist eine Vorrichtung bekannt, mit der die Geschwindigkeit von lichtstreuenden Objekten, die zu diesem Zweck belichtet werden, gemessen wird, wobei hierbei das Licht der Vorlichtstreuung der Objekte untersucht wird.

Weitere Vorrichtungen zur Messung der Geschwindigkeit und Größe von Partikeln sind aus US-A-5 561 515 und US-A-4 026 655 bekannt.

DE-A-199 57 808 beschreibt ein Verfahren und eine Vorrichtung zur Bestimmung von Stoffkonzentrationen und/oder der Strömungsgeschwindigkeit in Gasen, Aerosolen und Stäuben durch Analyse von Streulicht.

In DE-U-20 2011 110 039 ist eine Messvorrichtung zur planaren Bestimmung von Zustandsgrößen wie z.B. der Geschwindigkeit einer Fluidströmung beschrieben. Bei der bekannten Messvorrichtung wird die Fluidströmung mittels eines dieses durchdringenden Lichtbands beleuchtet, so dass die Fluidströmung mittels des Lichtbandes "geschnitten" wird und sich in der Lichtschnittebene ein 2D-Messfeld bildet. Das aus diesem Messfeld strömende Streulicht wird durch mindestens drei Objektive erfasst und in Rayleigh-Streulicht und Mied-Streulicht unterteilt. Beide Streulichtarten werden in Streulichtanalysatoren analysiert, um, falls gewünscht, gleichzeitig mehrere Zustandsgrößen der Fluidströmung bestimmen zu können.

US-A-5,148,229 offenbart ein Messverfahren zur Ermittlung der dreidimensionalen Geschwindigkeitskomponenten eines Partikels in einer Fluidströmung, wobei bei diesem Verfahren ausschließlich das Rückstreulicht des mit Laserlicht belichteten Partikels genutzt wird.

Ben Ovryn ET AL: "Coherent forward scattering particle-image velocimetry: application of Poisson's spot for velocity measurements in fluids", Proceedings Optical Diagnostics of Living Cells II, Bd. 2005, 2. Dezember 1993 (1993-12-02), Seiten 338-348, XP055462073, US ISSN: 0277-786X, DOI: 10.1117/12.163718, ISBN: 978-1-5106-1324-9 beschreibt ein Verfahren zur Erfassung von Partikelbewegungen, insbesondere von Bewegungen axial zur Blickrichtung/Bildachse mittels der Erfassung/Aufnahme und Vermessung eines Diffraktionsmusters oder von Lageveränderungen des Poisson-Punkts einzelner Partikel, indem Licht in Blickrichtung durch die Objektebene hindurch zur Bildebene gestrahlt wird (in-line) und das Durchlicht bzw. der an Partikeln gebeugte Durchlichtanteil als Diffraktionsmuster und als Poisson-Punkt auf der Bildebene sichtbar wird. Durch Analyse und Vergleich der Diffraktionsmuster kann die räumliche Bewegung von Partikeln, insbesondere Bewegungen axial zur Blickrichtung dargestellt werden (Seite 339, Zeile 3 und Seite 345, Absatz 1, Zeile 11). Dies wird alternativ gelöst durch den Einsatz einer Anordnung von hochempfindlichen Licht/Spannung-Wandlern zur Vermessung der Intensität der vorgestreuten Interferenzwellen (Seite 339, Absatz 3, Zeile 1) oder durch den Einsatz eines CCD-Arrays zur visuellen Erfassung von Diffraktionsmustern bzw. Poisson-Punkten einzelner Partikel in zeitlicher Folge (Seite 340, Absatz 1, Zeile 2ff). Dabei werden die Aufnahmen zunächst gespeichert (Videotape) und anschließend analysiert. Bei der Analyse kann die Bewegung einzelner Partikel auf Basis von Poisson-Punkten und unter Berücksichtigung ähnlicher Diffraktionsmuster erfasst und unterschiedlichen Fließbewegungen im Messvolumen zugeordnet werden (Seite 344, Absatz 2, Zeile 5ff und Fig. 11). Die Vermessung von Diffraktionsmustern per CCD Kamera erfolgt idealerweise an sphärischer Partikeln (Seite 339, Absatz 1, Zeile 9ff), wobei die Partikelmenge im Messvolumen so beschaffen sein muss, dass es nicht zu einer wesentlichen Überlappung von Diffraktionsmustern kommt (Seite 345, Absatz 3, Zeile 3ff).

Wie sich aus dem Vorstehenden ergibt, sind also in der Vergangenheit eine Vielzahl von unterschiedlichen Verfahren und Vorrichtungen entwickelt worden, die die strömungstechnischen Parameter von Grundwasserfließbewegungen durch Zuführen von Markierungen in Form von z.B. Elektrolyten, Farbstoffen und Temperaturanomalitäten über geeignete Detektoren die Verlagerung der Marker mit der Grundwasserdurchströmung erfassen. Desweiteren sind auch optische Verfahren eingesetzt worden, welche bereits im Grundwasser enthaltene und suspendierte, mitgeführte Stoffe als Marker nutzen.

Aufgabe der Erfindung ist es, ein Verfahren und eine Vorrichtung zur verbesserten optischen Erfassung von Fließbewegungen in flüssigen und/oder gasförmigen Medien, insbesondere im Grundwasser, bereitzustellen.

Zur Lösung dieser Aufgabe wird mit der Erfindung ein Verfahren gemäß Anspruch 1 zur optischen Erfassung von Fließbewegungen in flüssigen und/oder gasförmigen Medien vorgeschlagen.

Die vorstehend genannte Aufgabe wird erfindungsgemäße ferner gelöst mit einer Vorrichtung nach Anspruch 5 zur optischen Erfassung von Fließbewegungen in flüssigen und/oder gasförmigen Medien, insbesondere zur Durchführung des Verfahrens nach einer der zuvor genannten Ausprägungen.

Einzelne Ausgestaltungen des erfindungsgemäßen Verfahrens und der erfindungsgemäßen Vorrichtung sind Gegenstand der jeweiligen Unteransprüche.

Bei der Erfindung wird die Vorlichtstreuung von zu untersuchenden Partikeln genutzt, um deren Bewegungsprofil (Geschwindigkeit, ggf. Geschwindigkeitsänderung und Strömungsrichtung sowie ggf. Strömungsrichtungsänderung) zu untersuchen.

Erfindungsgemäß durchdringt das Lichtstrahlbündel den Erfassungsbereich der Messebene, gelangt aber nicht in die Lichteintrittsenden des optischen Pfades sondern ist an diesem seitlich vorbei gerichtet. Die Vorlichtstreuung wird hierbei zum Teil in den optischen Pfad eingekoppelt. Dies hat den Vorteil, dass kein Durchlichtanteil des Lichtstrahlbündels in den optischen Pfad gelangt. Es bedarf also keinerlei Maßnahmen, diesen Durchlichtanteil vom Streulicht zu separieren.

Nach der Erfindung wird innerhalb eines Messvolumens, das in dem zu vermessenen Medium platziert wird, mindestens eine Messebene definiert, in der sich bewegende Partikel befinden, die optisch erfasst werden. Hierzu weist die Messebene mindestens einen Erfassungsbereich auf, der von der einen Seite der Messebene aus (Beleuchtungsseite) mittels eines Lichtstrahlbündels beleuchtet wird, wobei das Lichtstrahlbündel vorzugsweise parallele Lichtstrahlen aufweist. Durch diese Belichtung entsteht infolge der Lichtstreuung an beleuchteten Partikeln Streulicht, das unter anderem auch zu der der Beleuchtungsseite gegenüberliegenden Seite der Messebene (Streulichtseite) gelangt, und zwar als Vorlichtstreuung. Es hat sich gezeigt, dass die Ausnutzung der Vorlichtstreuung aufgrund von deren Intensität besonders geeignet ist, Partikel optisch zu detektieren bzw. zu lokalisieren. Vorlichtstreuungseffekte kann man beispielsweise mit dem bloßen Auge wahrnehmen, indem im (Sonnen-)Gegenlicht oder schräg dazu in der Luft schwebende Partikel sichtbar werden.

Das als Vorlichtstreuung zur Vorlichtstreuungsseite abstrahlende Streulicht (oder zumindest ein Teil davon) wird erfindungsgemäß durch mindestens ein optisches Element (d.h. längs eines optischen Pfades) zu einer Bildaufnahmeebene (Bildebene des optisch abbildenden Systems) einer Kamera geleitet. Die Kamera nimmt eine Sequenz von Bildern des Erfassungsbereichs, der der Objektebene des Systems entspricht, auf. Anhand dieser Bildsequenz kann dann durch Bildauswerteverfahren ein Bewegungsvektor eines sich längs der Messebene bewegenden Partikels ermittelt werden.

Nach der Erfindung ist also vorgesehen sein, dass das Lichtstrahlbündel durch den Erfassungsbereich der Messebene hindurch und sein Durchlichtanteil seitlich an dem optischen Element vorbei gerichtet ist, wobei das Streulicht oder zumindest ein Teil davon durch das mindestens eine optische Element zu der Bildaufnahmeebene der Kamera geleitet wird.

Nach der Erfindung kann es zweckmäßig sein, wenn das optische Element mindestens ein dem Erfassungsbereich der Messebene zugewandtes Streulicht-Eintrittsende aufweist, das mit einem für das Streulicht transparenten Fensterelement versehen ist. Zusätzlich kann es hierbei zweckmäßig sein, dass die Beleuchtungseinheit mindestens ein Lichtstrahlbündel-Austrittsende aufweist, das dem oder einem Erfassungsbereich der Messebene zugewandt ist sowie dem Streulicht-Eintrittsende gegenüberliegt, und dass das Austrittsende mit einem das Lichtstrahlbündel seitlich austreten lassenden optischen Ablenkelement, insbesondere Prisma versehen ist.

Mit der Erfindung ist es möglich, Grundwasser-Fließgeschwindigkeiten in einem sehr breiten Geschwindigkeitsbereich von 10⁻⁸ m/s bis 10⁻³ m/s, was dem Bereich von 8 mm/Tag bis 8 m/Tag entspricht, zu erfassen, wobei neben der Geschwindigkeit selbstverständlich auch die Fließrichtung erfasst wird.

Erfindungsgemäß können mehrere Messebenen bzw. Messebenen mit mehreren Erfassungsbereichen vorgesehen sein. Die Messebenen liegen dann übereinander. Die Erfindung eignet sich insbesondere für Einlochbohr-Messungen, wobei die Messsonde, also die Vorrichtung, in ein vorhandenes Bohrloch (Brunnenpegel) eingebracht wird. Oberhalb und unterhalb des eigentlichen Messbereichs befinden sich üblicherweise sogenannte Packer bzw. Abschottelemente, die verhindern, dass der Messbereich zwischen den Packern bzw. Abschottelementen durch winklig zur Messebene verlaufende Strömungen beeinträchtigt wird. Auf diese Weise misst man also im Wesentlichen horizontale Strömungen, und zwar ungestört. Die beiden Abschottelemente sind mechanisch über möglichst dünne, den Durchfluss nur unwesentlich beeinträchtigende Verstrebungen verbunden. Das Beleuchtungslicht und das Licht der Vorlichtstreuung sollten möglichst nahe zur Messebene bzw. zum Messbereich der Messebene innerhalb des Messvolumens eingebracht bzw. aufgenommen werden. Dies gelingt zweckmäßigerweise unter möglichst geringer Beeinflussung der Strömung dadurch, dass von den Abschottelementen aus möglichst dünn ausgeführte Lichtleit-Elemente zum Leiten des Beleuchtungslichts zum Erfassungsbereich und zum Erfassen des Lichts der Vorstreuung aus dem Erfassungsbereich bzw. des Abbildes der Objektebene abstehen. Sind pro Messsonde bzw. Vorrichtung mehrere Messebenen bzw. Messebenen mit mehreren Erfassungsbereichen vorgesehen, so existieren dementsprechend auch mehrere Paare von aufeinander zu laufenden Lichtleitelementen der vorstehend beschriebenen Art und den entsprechenden Eigenschaften.

In weiterer vorteilhafter Ausgestaltung der Erfindung kann also vorgesehen sein, innerhalb des Messvolumens mehrere Messebenen mit jeweils mindestens einem Erfassungsbereich oder innerhalb einer Messebene oder mindestens einer der Messebenen mehrere Erfassungsbereiche zu definieren, wobei jeder Erfassungsbereich belichtet und durchleuchtet wird und wobei die pro Erfassungsbereich erzeugte Vorlichtstreuung durch eine Sequenz von Bildern aufgenommen und durch pro Bildsequenz erfolgende Bildauswertung für jeweils mindestens einen Partikel ein Bewegungsvektor ermittelt wird.

Als Partikel, die es zur Ermittlung der Strömungsrichtung und -geschwindigkeit optisch zu erfassen gilt, eignen sich einerseits inhärent in dem Medium vorhandene Partikel oder aber auch künstlich erzeugte oder eingegebene Messpartikel (Tracer), die zum Zwecke der Vermessung der strömungstechnischen Eigenschaften des Mediums in dieses eingebracht worden sind. Hier können beispielsweise spezielle Dosiervorrichtungen verwendet werden, mit denen die Partikel in den Brunnenpegel nahe dem Messvolumen bzw. in das Messvolumen eingebracht werden können. Beispiele für derartige Dosiervorrichtungen sind in DE-A-199 52 541, DE-A-199 52 542 und DE-C-44 43 307 beschrieben.

In weiterer vorteilhafter Ausgestaltung der erfindungsgemäßen Vorrichtung kann vorgesehen sein, dass die Beleuchtungseinheit eine Lichtaustrittsfläche und der optische Pfad eine Lichteintrittsfläche aufweist und dass sich beide Flächen gegenüberliegen sowie zwischen beiden Flächen der Erfassungsbereich der Messebene angeordnet ist.

Um zu verhindern, dass sich im Laufe der Zeit auf der Lichtaustrittsfläche der Beleuchtungseinheit (oder, je nach Anordnung, auf der Lichteintrittsfläche des zur Kamera führenden optischen Pfads für die erfasste Vorlichtstreuung) Partikel gravitativ absetzen, kann es zweckmäßig sein, die betreffende Lichtaustritts- bzw. Lichteintrittsfläche, auf der gravitativ eine Partikelablagerung erfolgen kann, geneigt zur Messebene auszurichten, wobei dann die jeweils andere Fläche, d.h. die Lichteintritts- oder die Lichtaustrittsfläche, vorzugsweise parallel zur Messebene verlaufen kann.

In weiterer vorteilhafter Ausgestaltung der Erfindung kann bei eine Ausgestaltung des Verfahrens bzw. der Vorrichtung mit mehreren Erfassunsbereichen innerhalb einer gemeinsamen Messebene oder innerhalb unteschiedlichen Messebenen vorgesehen sein,
- dass die Messebene mehrere Erfassungsbereiche aufweist,
- dass die Beleuchtungseinheit eine Belichtungsquelle und eine der Anzahl der Erfassungsbereiche gleichende Anzahl an Lichtaustrittsflächen aufweist,
- dass eine der Anzahl der Erfassungsbereiche gleichende Anzahl an optischen Pfaden mit Eintrittsflächen vorgesehen ist und
- dass zwischen der Belichtungsquelle und den Lichtaustrittsflächen einerseits und zwischen den optischen Pfaden und der Kamera andererseits jeweils eine Lichtumlenkeinheit zum Umlenken des Lichts der Belichtungsquelle zum sequentiellen, insbesondere zyklisch sich wiederholenden Austritt aus den Lichtaustrittflächen und zum sequentiellen, insbesondere zyklisch sich wiederholenden Umlenken des Lichts von den optischen Pfaden zur Kamera angeordnet ist, wobei die beiden Lichtumlenkeinheiten synchronisiert sind.

Diese Anordnung hat den Vorteil, dass mehrere Erfassungsbereiche sequentiell bzw. zyklisch mit Beleuchtungslicht beaufschlagt werden können, wobei nur eine einzige Lichtquelle verwendet wird; ebenso können mit lediglich einer einzigen Kamera sequentiell von den einzelnen beleuchteten Erfassungsbereichen dann, wenn diese beleuchtet werden, die Vorlichtstreuungsanteile optisch erfasst und aufgenommen werden. Die jeweiligen Lichtumlenkeinheiten umfassen dabei vorzugsweise optische Prismen o.dgl. Die einzelnen Erfassungsbereiche sind zweckmäßigerweise entlang einer gedachten Kreislinie angeordnet. Hierbei können dann Drehantriebe auf der Lichterzeugungsseite sowie auf der Vorlichtstreuungslichtaufnahmeseite angeordnet werden, die synchronisiert sind bzw. auf beiden Seiten können sich drehende Elemente mit Hilfe eines zentralen, einzigen Antriebs gedreht werden.

In weiterer zweckmäßiger Weiterführung der Erfindung kann vorgesehen sein, dass die Lichtleitelemente zu ihren die Lichtaustritts- bzw. Lichteintrittsflächen aufweisenden Enden hin konisch verjüngt ausgebildet sind und/oder optische Ablenkelemente, insbesondere Prismen aufweisen. Die Ausführung eines Lichtleitelementes als optisches Rohr mit konisch zur Fensterfläche zulaufender Verjüngung erfüllt einen weiteren Zweck. Einerseits wird durch die verjüngte Bauform die Strömung im Nahbereich des Erfassungsbereichs nicht entscheidend beeinträchtigt. Andererseits erlaubt es diese Ausführung, dass das Lichtstrahlbündel den Erfassungsbereich vollständig ausleuchtet, die Distanz zwischen Erfassungsbereich und Lichteintrittsfläche gering ist und der Lichtbündelstrahl an der Lichteintrittsfläche vorbeigeführt wird. Diese Bedingungen sind am besten erfüllt, wenn der Lichtbündelstrahl im Winkel von z.B. 20° bis 40° von der optischen Achse abgelenkt auf die Ebene des Erfassungsbereichs auftrifft. Der Vorteil ist, dass eine maximale Vorlichtstreuung ausgehend von Partikeln im Erfassungsbereich erzielt wird, ohne dass der Durchlichtanteil in die Lichteintrittsfläche fällt.

Nachfolgend werden verschiedene Aspekte der Erfindung und deren Anwendung beschrieben.

Die Erfassungsbereiche sind idealerweise kreisförmig auf Messebenen angeordnet, wobei der optische Strahlengang von Lichtstrahlbündel und bildgebendem Streulichtanteil mit Hilfe synchronisierter und mit Umlenkprismen ausgestatteter Drehteller durch Rotation dieser gekoppelten Drehteller auf den jeweiligen Erfassungsbereich ausgerichtet werden kann, so dass nur eine Lichtquelle und Beleuchtungseinheit und nur eine Kamera zur Vermessung der Strömung in mehreren Erfassungsbereiche erforderlich sind.

Die optischen Elemente sowie die elektronische Steuerung (zumindest teilweise) können vorteilhaft in den bereits oben genannten Packern oder Abschottelementen untergebracht sein.

Es ist zweckmäßig, die erfindungsgemäßen bildaufnehmenden Vermessungen der Durchflussbewegungen in insbesondere Brunnenpegeln in unterschiedlichen Tiefenpositionen des Brunnenpegels durchzuführen, und zwar einerseits, um die gewonnenen Ergebnisse vergleichen und statistisch auswerten zu können, und andererseits, um einen umfassenden Eindruck für die Interpretation der Ergebnisse zu erhalten. Insoweit umfasst die Erfindung also auch eine Multi-Level-Ausführung, um zeitgleich Messungen in mehreren Tiefen eines Brunnenpegels durchführen zu können. Hierbei werden dann vorzugsweise mehrere Messsonden bzw. Messmodule übereinander (und gegebenenfalls mechanisch miteinander gekoppelt) innerhalb eines Brunnenpegels eingesetzt. Diese Ausgestaltung der Erfindung hat zunächst den Vorteil, dass ein Messeinsatz erheblich wirtschaftlicher als bisher durchgeführt werden kann, da Einsatz- und Rüstzeiten eingespart werden können (das Umsetzen einer einzelnen Messsonde bzw. eines einzelnen Messmoduls in verschiedene Messtiefen entfällt und eine hydraulische Stabilisierung nach Einfahren und Fixieren der Messsonde im Brunnenpegel fällt nur einmal an). Ein weiterer Vorteil ist darin zu sehen, dass ein Mehrgewinn an Daten zur Stützung der Ergebnisse und zur Stützung der statistischen Auswertung und der Interpretation der Messdaten zu verzeichnen ist.

Infolge von Bohrung und Brunnenausbau sind die hydraulischen Randbedingungen am und im Brunnenpegel gestört/verändert und die Stromlinien werden beim Durchfluss verzerrt. Im Anstrom zum Brunnen hin erfolgt eine Stromlinienscharung, im Abstrom eine korrespondierende Auffächerung. Die Geschwindigkeit im Brunnen ist in der Regel höher als in der Umgebung, der Durchfluss allgemein laminar.

In kreisförmigen Brunnenquerschnitten bildet sich idealerweise eine axialsymmetrische Durchflussgeometrie aus, wobei die median durchlaufende Fließbahn die im umgebenden Sediment vorherrschende Fließrichtung am besten widerspiegelt.

Die maßgeblich interessierende Fließgeschwindigkeit im umgebenden Sediment kann über die Kenntnis der Fließbahnverzerrung und der üblicherweise vorliegenden Pegel-Ausbaudaten (z.B. Bohrdurchmesser, Filterrohr-Durchlässigkeit) möglichst realitätsnah ermittelt werden. In der Praxis wird diese Verzerrung mit Hilfe von bekannten Formelwerken lediglich aus den Pegel-Ausbaudaten ermittelt (der sogenannte Alpha-Faktor - siehe z.B. Moser, H. & Rauert,W. (1980): Isotopenmethoden in der Hydrologie.- in: Matthess, G. (Hrsg.): Lehrbuch der Hydrogeologie, Band 8, Berlin) . Die Anwendung dieser Formeln trägt jedoch nicht allen in der Praxis auftretenden Einflussfaktoren hinreichend Rechnung. Dies führt zu einer hohen Varianz der berechneten Fließgeschwindigkeit im Sediment - ein Grund für die untergeordnete Anwendung von Einbohrloch-Methoden.

Die Kenntnis der sich quer zur Brunnenachse ausbildenden Stromlinienverzerrung/des Fließbahnverlaufs im Brunnenpegel ist von entscheidender Bedeutung, um die interessierende Fließgeschwindigkeit im umgebenden Sediment so realitätsnah wie möglich ableiten zu können.

Bei allen Fließmessverfahren in Brunnenpegeln wird üblicherweise ein Bohr- oder Rohrabschnitt hydraulisch nach oben und unten isoliert, so dass ein zylinderförmiger Messraum gebildet wird. Bei allen bekannten bildaufnehmenden Verfahren erfolgt die optische Erfassung der Feinschwebstoffe an einem Punkt: in der axialen Mitte des durchströmbaren Messraums einer Messsonde bzw. axial in Brunnenpegeln.

Um Feinschwebstoffe bzw. mikroskopische Partikel optisch vereinzelt zu erfassen ist eine hohe optische Auflösung erforderlich. Auf Grund des erforderlichen Abbildungsmaßstabs ist bei der Verwendung von bekannten, marktverfügbaren Bildaufnahmesensoren (optischen CCD- oder CMOS-Sensoren) die Größe des betrachteten Bildfeldes dergestalt begrenzt, dass lediglich ein nur sehr begrenzter Ausschnitt aus dem Durchflussfeld erfasst werden kann, über den nicht auf das Maß und die Symmetrie der Stromlinienverzerrung über den gesamten Brunnenquerschnitt zurückgeschlossen werden kann.

Es wurde folgende Lösung erdacht, um auf das Maß und die Symmetrie des radialen Stromlinienfeldes über den Brunnenquerschnitt rückschließen zu können: Es werden mehrere, über den Querschnitt des Messraums verteilte Aufnahmepunkte eingerichtet, die idealerweise auf ein und derselben Höhe positioniert und auf einer gemeinsamen Kreisbahn innerhalb des Messraums angeordnet sind.

Um die Durchflusssituation quer zur Brunnenachse im Messraum repräsentativ abbilden zu können, welche näherungsweise der Durchflusssituation im Brunnen ohne eingebaute Messapparatur entspricht, ist eine Mindesthöhe des Messraums bzw. eines isolierten Brunnenpegelabschnitts erforderlich. Diese Höhe ist abhängig beispielsweise von dem Kaliber des Brunnenrohres und der Größe und Anordnung der Filteröffnungen im Brunnenrohr. Die erwünschte Durchflusssituation bildet sich dann naturgemäß vorzugsweise in der vertikalen Mitte des Messraums ab. Die Bildaufnahmepositionen müssen daher idealerweise in der vertikalen Mitte des Messraums positioniert werden und liegen damit in einer vorgegebenen Distanz zum oberen und unteren Abschlusselement des Messraums.

Um aus diesen Bildaufnahmepositionen auch bei einer hohen Trübe des strömenden Mediums ein hinreichend verwertbares Abbild mit optisch vereinzelbaren Partikelpositionen sowie eine hinreichende Ausleuchtung der Betrachtungsebene zu realisieren, ist es erforderlich, die Distanz zwischen dem Betrachtungsfeld und den Fenstern, über die einerseits Licht in das strömende Medium eingebracht und über die andererseits das von den transportierten Partikeln rückgestreute Licht eingekoppelt wird, kurz zu halten. Die Strecke der optischen Übertragung durch trübes, strömendes Medium ist dann reduziert. So ist gewährleistet, dass aus dem Betrachtungsfeld rückgestreutes Licht einzelner Partikel als Lichtpunkte abbildbar ist. Gleichzeitig darf die Fließsituation hier nicht durch die Nähe optischer Elemente entscheidend beeinträchtigt werden.

Das distale Ende des oberen Lichtleitelements ist in der Form eines Kreiskegelstumpfes ausgeführt (konusförmig) und die Achse des optischen Pfades verläuft senkrecht zur Basisfläche des Kreiskegelstumpfes, also der Lichteintrittsfläche, sowie der des Erfassungsbereichs.

Wie oben diesbezüglich bereits angemerkt, ist es insoweit zweckmäßig, wenn die Fensteröffnungen distal an den Enden von optischen Bauelementen liegen, die beispielsweise in Form von optischen Rohren in den Messraum hineinragen und deren Enden so ausgeführt sind, dass sie konisch zur Fensterfläche hin zulaufen, wobei die Größe der Fensterfläche näherungsweise mit der Betrachtungsfläche korrespondiert.

Um eine optisch einwandfreie Transmission für Ausleuchtung und Bilderfassung durch "liegende" Fensterflächen zu gewährleisten, sind diese Fensterflächen gegenüber der horizontalen Ebene geneigt, damit das bei stationärer Messposition sich absetzende/sedimentierende Material entlang der geneigten Fensterfläche abgeführt wird.

Fließmodellierungsergebnisse zeigt, dass Bauformen, welche lediglich nur von einem Abschlusselement aus in den Messraum hineinragen, die Durchflussgeometrie im Messraum dergestalt beeinflussen, dass Fließbahnen vertikal ausgelenkt werden und die Bauformen vorzugsweise über- bzw. unterströmt werden. Die Auslenkung der Fließbahnen führt zu einem vertikalen Drift der Schwebstoffe durch die Betrachtungsflächen und insgesamt zu einer asymmetrischen, komplexeren Durchflussgeometrie im Messraum. Diese Form der Anordnung wirkt sich nachteilig auf die Messwertaufnahme sowie die Rekonstruktion der Durchflussgeometrie aus.

Es stellt sich die Anforderung, Bauelemente im Messraum dergestalt anzuordnen, dass einerseits keine vertikale Auslenkung von Fließbahnen im Messraum erfolgt und andererseits den durch die Bauelemente gegebenen Fließwiderstand im Messraum so zu verteilen, dass unabhängig von der Richtung des Anstroms in den Messraum immer ein annähernd identisches Durchflussverhalten von der Anordnung vorgegeben wird, um die Ausbildung einer rekonstruierbaren Durchflussgeometrie zu ermöglichen.
1. Der Anforderung wird mit der Erfindung dadurch entsprochen, dass Bauelemente, welche von einem Abschlusselement in den Messraum hineinragen, durch in Form und Länge näherungsweise identische Bauelemente ergänzt werden, die von dem gegenüberliegenden Abschlusselement möglichst oder idealerweise spiegelsymmetrisch gegenüberliegend in den Messraum hineinragen. Simulationsergebnisse zeigen, dass diese Anordnung den Durchfluss in der Messzelle gegenüber der vorigen Anordnung deutlich geringer beeinflusst. Vertikale Auslenkung von Fließbahnen treten nur untergeordnet auf, es bildet sich eine gleichförmigere Durchflussgeometrie in der Messzelle aus. Wichtig ist, dass der Fließwiderstand im Vertikalprofil des Messraums gleich verteilt ist.
2. Der Anforderung wird mit der Erfindung ferner dadurch entsprochen, dass die Anzahl der auf Kreisbahnen angeordneten, in den Messraum hineinragenden Bauelemente ungerade ist, um eine Anzahl an Positionen, die eine Vorzugsfließrichtung infolge der Abschattung durch parallel zur Anströmung ausgerichtete Bauteile vorgeben, zu reduzieren.

Die einzelnen erfindungsgemäßen Aspekte mit den zugehörigen zu erfüllenden Anforderungen lassen sich wie folgt zusammenfassen:

### Erster Aspekt

Anforderung: Um aus der Durchflussgeschwindigkeit im Brunnen die Fließgeschwindigkeit im umgebenden Sediment so realitätsnah wie möglich ableiten zu können, ist die Kenntnis der horizontalen Durchflussgeometrie bzw. Verzerrung der Fließbahnen erforderlich. Dazu muss die Form der Durchflussgeometrie erkennbar gemacht werden.

Lösung: Um das Maß und die Symmetrie der Fließbahnverzerrung ableiten zu können, erfolgt die Bildaufnahme bzw. die optische Erfassung der Fließbewegung an mehreren, über den Querschnitt des Messraums verteilten Positionen, wobei diese Positionen idealerweise in korrespondierenden Abständen zueinander und auf Kreisbahnen angeordnet sind sowie vorzugsweise in der vertikalen Mitte des Messraums liegen. Durch die Kombination der an diskreten Positionen im Messraum ermittelten Fließrichtungen und -geschwin-digkeiten kann die Durchflussgeometrie dann modellhaft rekonstruiert werden.

### Zweiter Aspekt

Anforderung: Bauelemente, welche nur von einem Abschlusselement aus in den Messraum hineinragen, bedingen einen asymmetrischen Fließwiderstand im Messraum, der zu einer vertikalen Auslenkung der Fließbahnen führt und zu unterschiedlichen Fließgeschwindigkeiten im Vertikalprofil des Messraums. Die Durchflusssituation im Messraum wird damit komplexer und die Ausbildung einer repräsentativen Stromlinienverzerrung auf der horizontalen Ebene beeinträchtigt. Es stellt sich die Aufgabe, Bauelemente im Messraum so anzuordnen, dass
1) möglichst keine vertikale Auslenkung von Fließbahnen im Messraum erfolgt und
2) den durch die Bauelemente gegebenen Fließwiderstand im Messraum so zu verteilen, dass unabhängig von der Richtung des radialen Anstroms in den Messraum ein annähernd gleicher Fließwiderstand gegeben ist, um den Einfluss auf die Ausbildung der Durchflussgeometrie durch Bauelemente gering und gleich zu halten.

Lösung: Die Anforderung wird dadurch gelöst, dass Bauelemente, welche von einem Abschlusselement in den Messraum hineinragen, durch in Form und Länge näherungsweise identische Bauelemente ergänzt werden, die von dem gegenüberliegenden Abschlusselement insbesondere idealerweise spiegelsymmetrisch gegenüberliegend in den Messraum hineinragen. Die Anzahl der auf Kreisbahnen angeordneten, in den Messraum hineinragenden Bauelemente ist ungerade, um eine Vorzugsfließrichtung infolge der Abschattung durch parallel zur Anströmung ausgerichtete Bauteile zu vermeiden.

### Dritter Aspekt

Anforderung: Um bei sehr geringer Schwebstofffracht das rückgestreute Licht auch von den Schwebstoffen, deren Größe die optische Auflösung des bildaufnehmenden Sensors unterschreitet, in Form von verfolgbaren Lichtpunkten zu registrieren, ist eine Ausleuchtung der Betrachtungsfläche mit hoher Lichtintensität erforderlich. Gleichzeitig darf die Ausleuchtung keine thermische Aufheizung des strömenden Mediums verursachen, um daraus resultierende konvektive Fließbewegungen zu unterbinden.

Lösung: Um auch kleinste Partikel optisch kenntlich zu machen und um eine bestmögliche Lichtausbeute zu erzielen, ist eine 100%-Vorlichtstreuung zweckmäßig, was nur bei direktem Gegenlicht und unter Abschattung des einstrahlenden Lichts im anschließenden Strahlengang erzielt werden kann. Bei der Erfindung lässt sich die Einkopplung der Vorlichtstreuung (unter Vermeidung der Einkopplung des Durchlichtanteils) des Lichtstrahlbündels realisieren, indem der Winkel des auf den Erfassungsbereich einstrahlenden Lichtbündels von der Lichterzeugungsseite zur Vorlichtstreuung-Lichtaufnahmeseite im Bereich von 0° bis 90° zur Messebene durch den Erfassungsbereich geleitet wird.

### Vierter Aspekt

Anforderung: Bei hoher Trübe und bei längerem Messbetrieb kann sich in Suspension im strömenden Medium befindliches Material auf horizontale, liegende Fensterflächen ablagern. Dies führt zu einer optischen Abschattung und damit zu einer reduzierten optischen Transmission. Bei den Licht auskoppelnden Fenstern können infolge von thermischer Wandlung an dem abgelagerten Material unterwünschte konvektive Fließbewegungen an der Fensterfläche und in der Betrachtungsfläche auftreten.

Lösung: Um die optische Transmission an den Fenstern für Ausleuchtung und Bilderfassung insbesondere bei längeren Verweilzeiten und im kontinuierlichen Messbetrieb zu gewährleisten, sind liegende Fensterflächen gegenüber der horizontalen Ebene geneigt, so dass sich absetzendes/sedimentierendes Material entlang der geneigten Fensterfläche gravitativ abgeführt wird.

### Fünfter Aspekt

Es zeigt sich, dass der die Lichteintrittsfläche passierende Durchlichtanteil sich insofern nachteilig auf die optische Übertragung zwischen Objekt- und Bildebene auswirken kann, als dass geringste Verschmutzungen auf der Lichtaustrittsfläche der Beleuchtungseinheit, der Lichteintrittsfläche sowie auf optischen Elementen im Strahlengang zu unerwünschten Streulichteffekten führen, welche die Bildübertragung überlagern können und somit die Abbildungsschärfe des übertragenen Bildes auf der Bildebene beeinträchtigen.

Resultierende Anforderung: Um dies ausschließen zu können, ist es zweckmäßig dafür zu sorgen, dass der den Erfassungsbereich passierende Durchlichtanteil nicht in die gegenüberliegende Lichteintrittsfläche fällt. Gleichzeitig soll eine möglichst hohe Vorlichtstreuung ausgehend von Partikeln im Erfassungsbereich erzielt werden.

Es stellt sich die Anforderung, dass das von der Beleuchtungsseite aus in den Erfassungsbereich eintretende Licht einerseits den Erfassungsbereich vollständig ausleuchtet und andererseits nicht in die Lichteintrittsfläche fällt.

Desweiteren sollte die Distanz zwischen Lichtaustrittsfläche und Lichteintrittsfläche so gewählt sein, dass einerseits die auf der Objektebene befindlichen Partikel auch bei einer starken Trübung des zu vermessenden Mediums bzw. einer hohen Partikeldichte trennscharf abgebildet werden und andererseits die Durchflussbewegung im Erfassungsbereich durch die in das Messvolumen hineinragenden Lichtleitelemente nur unwesentlich beeinträchtigt wird.

Lösungsansatz: Um dies zu erreichen, wird das von der Beleuchtungsseite kommende, typischerweise parallel zur Achse der Lichtleitelemente verlaufende Lichtbündel unmittelbar vor Erreichen des Erfassungsbereichs (der Messebene) um z.B. 20° bis 40° in Richtung des Lichtstrahls von der gemeinsamen Achse abgelenkt, so dass das Lichtbündel den Erfassungsbereich in einem Anstrahlwinkel von z.B. 70° bis 50° schneidet, wobei die Distanz zwischen Erfassungsbereich und Lichteintrittsfläche so gewählt ist, dass das so abgelenkte Lichtbündel einerseits den Erfassungsbereich vollständig ausleuchtet und andererseits seitlich an der Lichteintrittsfläche vorbeigeleitet wird.

Die Ablenkung des Lichtbündels kann beispielsweise durch ein Ablenkprisma in Form z.B. eines sogenannten "Bauernfeind"-Prismas, welches auf das distale Ende des unteren Lichtleitelements aufgebracht ist, oder durch ein Fenster mit winkliger Lichtaustrittsfläche erfolgen.

Idealerweise liegen sich beide Lichtleitelemente axial gegenüber, können aber je nach Ausgestaltung der Lichtablenkung des Lichtbündels seitlich zueinander versetzt sein.

### Sechster Aspekt

Anforderung: Das durchströmende Medium kann infolge einer sehr hohen Schwebstofffracht häufig trübe sein. Dies bewirkt, dass die optische Transmission eingeschränkt ist. Eingebrachtes Licht zur Ausleuchtung der Betrachtungsfläche wird bei Auskopplung in das strömende Medium stark gestreut, so dass Schwebstoffe in einiger Entfernung von der Betrachtungsfläche optisch nicht mehr einzeln erfasst werden können bzw. der Kontrast der von einzelnen Partikeln rückgestreuten Lichtpunkte aufgelöst wird. Es können somit keine für die Ermittlung der Fließbewegung auswertbaren Bilder gewonnen werden.

Lösung: Eine hinreichende optische Erfassung individueller Schwebstoffe (Zuordnung von Kontrastdifferenzen) und Ausleuchtung ist nur unmittelbar an der abzubildenden Objektebene bzw. Betrachtungsfläche gegeben. Daher sind die Fensterflächen für die Bildaufnahme als auch für die Lichtauskopplung im unmittelbaren Nahbereich der Betrachtungsfläche positioniert, so dass auch bei hoher Schwebstofffracht die auf der fokussierten Betrachtungsfläche transportierten Partikel vereinzelt abbildbar sind.

Denn bei einer hohen Trübung des zu vermessenden Mediums bzw. einer hohen Partikeldichte im Medium ist zu berücksichtigen, dass das zur Abbildung der Partikel genutzte vorgestreute Licht nicht vollständig durch Streulicht anderer Partikel, welche ober- und/oder unterhalb des Erfassungsbereichs liegen, überlagert wird, wodurch die Positionserfassung der den Erfassungsbereich passierenden Partikel verhindert bzw. verschlechtert wird, da diese nicht ausreichend trennscharf auf der Bildebene abgebildet werden.

### Siebter Aspekt

Anforderung: Im Nahbereich der Betrachtungsfläche werden die Fließverhältnisse durch nahständig positionierte Fensterelemente negativ beeinflusst. Lösung: Um die Einflussnahme auf die Fließverhältnisse am Betrachtungsfeld durch die Fensterelemente zu reduzieren, sind die Fensterelemente so ausgeführt, dass die dem fließenden Medium zugewandten Fensterflächen näherungsweise in Form und Umfang der abzubildenden Betrachtungsfläche entsprechen und dass die Fenster bzw. die fenstertragenden Elemente konusförmig ausgeführt sind, wobei jeweils die distale Fensterfläche die Konusspitze bildet bzw. das fenstertragende Element konisch zur Fensterfläche hin zuläuft.

### Achter Aspekt

Im Messvolumen können sich bei laminaren Strömen raumfüllende, stationäre Wirbel ausbilden. Die Ausbildung dieser Wirbel kann einen erheblichen Anteil des Messvolumens ausfüllen und somit die Durchflussgeometrie entscheidend beeinflussen, indem beispielsweise in einem Teil des Messvolumens durch die Ausbildung der stationären Wirbel der Durchfluss geblockt wird, was zu einer Erhöhung der Durchströmgeschwindigkeit in anderen Teilen des Messvolumens führt.

Die Durchflussbewegung im Messvolumen ist infolge der Wirbelbildung somit nicht mehr einheitlich. Die Fließbewegungen in den Erfassungsbereichen sind daher nicht repräsentativ und es kann in diesem Fall nicht hinreichend genau auf die Fließbewegung im angrenzenden Gestein/Boden zurückgeschlossen werden.

Es stellt sich die Anforderung, die Ausbildung von stationären Wirbeln, die ein gleichgerichtetes, laminares Strömen im Messvolumen verändern, dadurch zu unterbinden, dass der Strömungswiderstand im Messvolumen derart ist, dass das Durchflussbild im Messvolumen im Wesentlichen dem des laminaren, gleichgerichteten Durchflusses ohne Wirbelbildung entspricht. Der Strömungswiderstand muss dabei unverändert gleich bleiben und darf sich nicht, beispielsweise durch gravitatives Absetzen von Partikeln auf den Strömungswiderstand bestimmenden Elementen, verändern. Denn der Strömungswiderstand muss bei der Ermittlung der Fließgeschwindigkeiten eine kalkulierbare Größe darstellen.

Hier bietet sich folgende Lösung an. Das Messvolumen wird mit einem definierbaren Durchströmungswiderstand dergestalt ausgestattet, dass aus beliebiger Anströmrichtung heraus dem strömenden Medium ein gleicher Widerstand entgegengesetzt wird, mit dem Ziel, dass die Passage des Mediums durch diesen Strömungswiderstand hindurch einerseits einen einheitlich ausgerichteten laminaren Durchfluss im Messvolumen erzwingt und andererseits einen "Offset" zur Ausbildung von raumfüllenden Wirbeln unterdrückt.

Der Strömungswiderstand ist dazu in Form von mehreren runden Verstrebungen ausgeführt, die das Messvolumen vom oberen zum unteren Abschlusselement durchziehen und die in möglichst äquidistanten Abständen zueinander und zu den Lichtelementen auf der gesamten Basisfläche der Abschlusselemente verteilt angeordnet sind, wobei die einzelnen Verstrebungen den gleichen Durchmesser wie oder einen geringeren Durchmesser als die Lichtleitelemente aufweisen. Allgemeiner ausgedrückt weisen die Lichtleitelemente und die Verstrebungen zueinander kongruente Querschnittsformen (vorzugsweise rund oder stromlinienförmig) auf, wobei die Querschnittsfläche jeder Verstrebung gleich der oder kleiner als die Querschnittsfläche jedes Lichtleitelements ist.

Die Erfindung wird nachfolgend anhand eines Ausführungsbeispiels sowie unter Bezugnahme auf die Erfindung näher erläutert. Im Einzelnen zeigen dabei:
- Fig. 1: schematisch die Anordnung einer Messvorrichtung am Beispiel einer bezüglich der Lichteinkopplung in ein Messvolumen und der Durchlichtauskopplung aus dem Messvolumen nicht zur Erfindung gehörenden ersten Variante in einem Brunnenpegel (Brunnenbohrloch) zur Ermittlung der Richtung und Geschwindigkeit einer Grundwasserströmung,
- Fig. 2: eine schematische Darstellung der optischen, lichttechnischen Einzelbestandteile sowie des internen Aufbaus der Messvorrichtung gemäß Fig. 1 und
- Fign. 3 und 4: zwei Ausführungsbeispiele von Vorrichtungen gemäß der Erfindung.

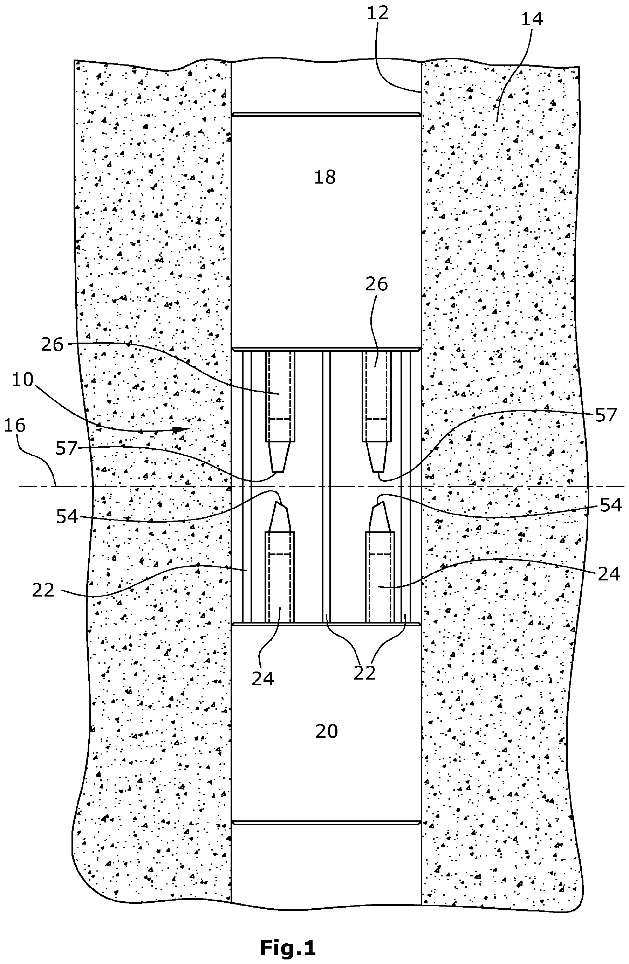

Fig. 1 zeigt die Einsatzsituation einer Messvorrichtung 10 gemäß der ersten Variante in einem Brunnenpegel bzw. Bohrloch 12 im Erdreich 14, um in einer vorgegebenen Tiefe 16 die strömungstechnischen Eigenschaften (Richtung und Geschwindigkeit) der Grundwasserströmung zu vermessen. Es sei an dieser Stelle angemerkt, dass mehrere Messvorrichtungen 10 gemäß Fig. 1 gleichzeitig in unterschiedlichen Tiefen innerhalb des Bohrlochs 12 angeordnet sein können.

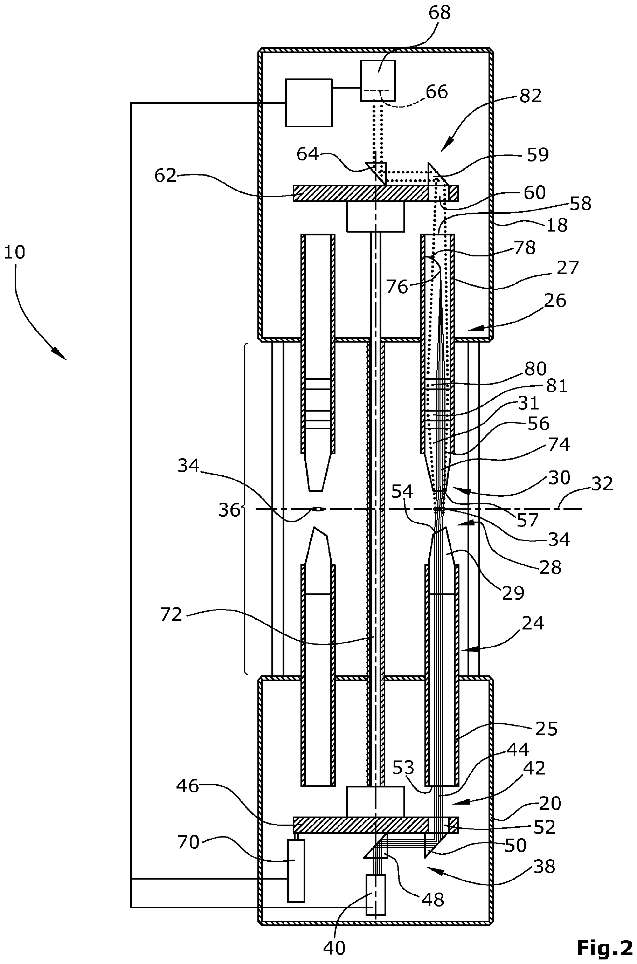

Die Messvorrichtung 10 weist ein erstes oberes Abschott- bzw. Packerelement 18 und ein unteres zweites Packerelement 20 auf, die den ein Messvolumen bildenden Abschnitt zwischen den beiden Packerelementen 18,20 insoweit abschotten, als vertikal durch das Bohrloch 12 strömendes Grundwasser die Horizontalmessung nicht bzw. im Wesentlichen nicht beeinflusst. Die beiden Abschott- oder Packerelemente 18,20 sind durch Streben 22 miteinander verbunden. Von den Abschott- bzw. Packerelementen 18,20 stehen rohr- oder stabförmige optische Lichtleitelemente 24,26 aus lichtleitendem Material (z.B. Vollmaterial) oder je als Fenstertubus 25, 27 ausgebildet ab, deren Aufbau und Funktion in Kombination mit weiteren Elementen der Messvorrichtung 10 nachfolgend anhand von Fig. 2 näher erläutert werden.

Die Messvorrichtung 10 weist mehrere Paare von vorzugsweise entlang einer Kreislinie angeordneten Lichtleitelementen 24,26 auf, die mit den Enden 28,30 ihrer Fenstertuben 25, 27 einander gegenüberliegen (in den Fign. sind jeweils lediglich zwei Paare gezeigt). Jeder Fenstertubus 25, 27 weist an seinem Ende 28, 30 ein Fensterelement 29, 31 auf. Zwischen diesen Enden 28,30 befindet sich die Messebene 32 sowie jeweils ein Erfassungsbereich 34, die wiederum innerhalb des Messvolumens 36 zwischen den beiden Abschott- bzw. Packerelementen 18,20 angeordnet sind. Innerhalb der Messebene 32 strömt Grundwasser mit natürlichen oder künstlichen Partikeln, die es gilt, optisch zu detektieren, und zwar in Form von Sequenzen von Aufnahmen mit Hilfe einer Kamera, was nachfolgend näher erläutert wird.

Bei der Messvorrichtung gemäß Fign. 1 und 2 weist das untere Abschott- bzw. Packerelement 20 eine Beleuchtungseinheit 38 auf, die als Belichtungsquelle 40 in Form einer Laserlichtquelle zur Aussendung eines Lichtstrahlbündels 42 mit parallelen Lichtstrahlen 44 ausgebildet ist. Damit das Licht der Belichtungsquelle 40 sequentiell zu den Lichtleitelementen 24 geführt werden kann, wird es von einem zentral auf einem Drehteller 46 befindlichen Prisma 48 radial nach außen umgelenkt, um dort von einem weiteren Prisma 50 durch eine Öffnung 52 in dem Drehteller 46 zur Lichteintrittsseite 53 des Lichtleitelements 24 umgelenkt zu werden. Das Licht gelangt durch das Lichtleitelement 24 (Fenstertubus 25) hindurch und tritt über eine leicht angeschrägte Lichtaustrittsseite 54 seines Fensterelements 29 aus. Das austretende Licht gelangt durch den fokussierten Erfassungsbereich 34 und wird dort teilweise an Partikeln gestreut. Dieses Vorstreulicht ist bei 56 gezeigt.

Das Vorstreulicht 56 gelangt durch die Lichteintrittsseite 57 an dem Fensterelement 31 des Lichtleitelement 26 in dessen Fenstertubus 27 und aus dessen Lichtaustrittsseite 58 zu einem weiteren Umlenkprisma 59, das hinter einer Öffnung 60 eines weiteren Drehtellers 62 angeordnet ist, welcher sich in dem oberen ersten Abschott- bzw. Packerelement 18 befindet. Das Umlenkprisma 59 lenkt das empfangene Licht radial einwärts zum Mittelpunkt des Drehtellers 62, wo es von einem dort angeordneten Umlenkprisma 64 in Richtung auf die Bildaufnahmeebene 66 einer Kamera 68 gelangt.

Die Belichtung eines Erfassungsbereichs bzw. jedes Erfassungsbereichs erfolgt über eine gewisse Zeit; während dieser Zeit wird mit der Kamera eine Bildsequenz aus dem Vorstreuungslicht aufgezeichnet. Durch Auswertung der Bilder dieser Sequenz können dann der Richtungsvektor und die Geschwindigkeit von einzelnen Partikeln, die sich während der Belichtungszeit durch den Erfassungsbereich 34 innerhalb der Messebene 32 bewegt haben, ermittelt werden. Danach wird dann der Drehteller 46 schrittweise bis zum nächsten Paar von Lichtleitelement 24,26 weitergedreht. Hierzu dient ein Drehantrieb 70, der in diesem Ausführungsbeispiel in Drehantriebseingriff mit dem Drehteller 46 im unteren Abschott- bzw. Packerelement 20 angeordnet ist, aber ebenso gut auch im oberen Abschott- bzw. Packerelement 18 zum drehenden Antrieb des dort befindlichen Drehtellers 62 angeordnet sein kann. Beide Drehteller 46,62 sind synchronisiert, was ihre Drehung betrifft, was in diesem Ausführungsbeispiel durch eine mechanische Kopplungsstange 72 erfolgt, aber ebenso gut auch durch eine entsprechend synchronisierte Ansteuerung zweier getrennter Antriebe für die Drehteller 46,62 realisiert werden könnte.

Wie anhand von Fig. 2 zu erkennen ist, tritt durch den Erfassungsbereich 34 auch derjenige Anteil des Lichtstrahlbündels 42, der nicht an Partikeln gestreut wird. Dieser Durchlichtanteil ist mit dem Bezugszeichen 74 bezeichnet und würde, wenn er von der Kamera 68 erfasst werden würde, die Bildauswertung und Bildinformationen stören. Daher wird dieser Durchlichtanteil 74 durch ein optisches Unterdrückungselement 76 herausgefiltert. Hierbei kann es sich um ein Bauteil mit schwarzer Fläche oder aber um einen Auskoppellichtleiter 78 handeln. Die Auskopplung des Durchlichtanteils 74 gelingt durch Verwendung eines entsprechenden Linsensystems, wie beispielsweise durch die Verwendung von Achromaten 80, 81 im optischen Pfad 82 zwischen dem Erfassungsbereich 34 und der Kamera 68 und insbesondere vor der Umlenkung des Vorstreulichts 56, d.h. vor Austritt aus dem Lichtleitelement 26. Durch die beiden Achromaten 80, 81 werden der Abbildungsmaßstab sowie die Fokuspunkte von Bildebene (d.h. Messebene 32) und Abbildungsebene (Bildaufnahmeebene 66) festgelegt.

Bei mehreren Erfassungsbereichen 34 sind diese idealerweise entlang einer Kreislinie in der Messebene 32 angeordnet, wobei der optische Strahlengang von Lichtstrahlbündel 42 und Durchlichtanteil 74 sowie dem bildgebenden Vorstreulichtl 56 mit Hilfe synchronisierter und mit Umlenkprismen 50 ausgestatteter Drehteller 46, 62 durch Rotation dieser gekoppelten Drehteller auf den jeweiligen Erfassungsbereich 34 ausgerichtet werden kann, so dass nur eine Lichtquelle 40 und Beleuchtungseinheit 38 und nur eine Kamera 68 zur Vermessung der Strömung in mehreren Erfassungsbereiche 34 erforderlich sind.

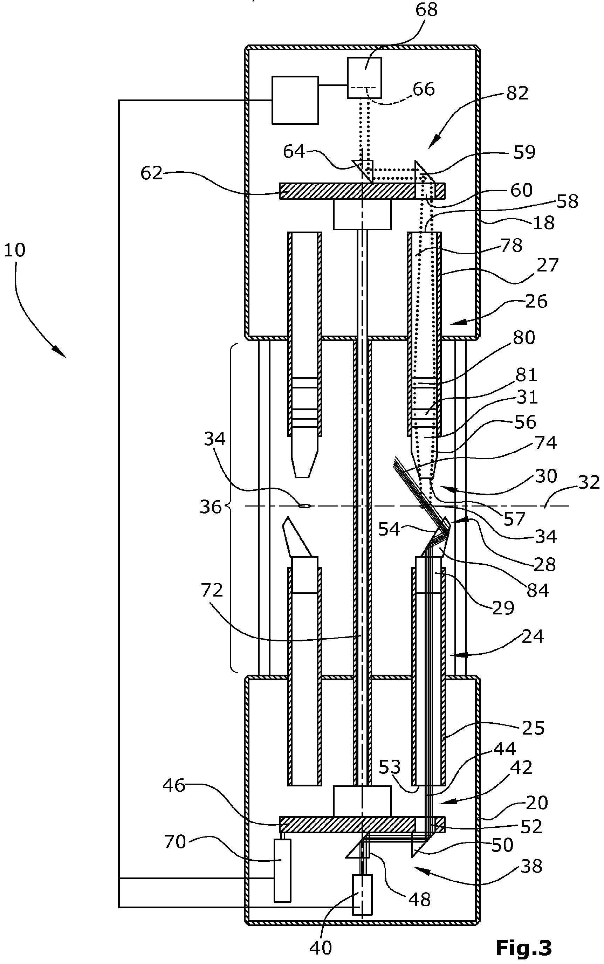

In Fig. 3 ist ein Ausführungsbeispiel einer erfindungsgemäßen Vorrichtung 10' gezeigt. Soweit die Elemente dieser Vorrichtung 10' konstruktions- und/oder funktionsgleich zu den jeweiligen Elementen der Vorrichtung 10 der Fig. 2 sind, sind sie in Fig. 3 mit den gleichen Bezugszeichen versehen.

Der Unterschied zwischen den Vorrichtungen 10 und 10' ist in der Art der Einkopplung des Vorstreulichts 56 und in der Verhinderung der Einkopplung des Durchlichtanteils 74 des Lichtstrahlbündels 42 gegeben, der nach dem Durchdringen des Erfassungsbereichs 34 seitlich an dem Fensterelement 31 des Lichtleitelements 26 vorbei gerichtet ist. Zu diesem Zweck ist auf das Fensterelement 29, das als Vollzylinder ausgebildet ist, ein Ablenkprisma 84 aufgesetzt. Die Lichtaustrittsfläche 54 des Ablenkprismas 84 ist um 30° zur Achse der Lichtleitelemente 24, 26 geneigt. Das Lichtstrahlbündel 42 wird um 60° vollständig durch den Erfassungsbereich 34 geleitet, jedoch an der Lichteintrittsfläche 57 vorbei geleitet. Gleichzeitig verhindert die Neigung der Lichtaustrittsfläche 54 ein gravitatives Absetzen von Schwebstoffen auf der Lichtaustrittsfläche 54. Mit dem aufgesetzten Ablenkprisma 84 kann die Umlenkung des Lichtstrahlbündels 42 so realisiert werden, dass die Lichtleitelemente 24, 26 parallel gegenüber liegen.

Der Vorteil der Lösung mit aufgesetzten Ablenkprismen 84 ist, dass die Lichtleitelemente 24, 26 symmetrisch gegenüber liegend angeordnet werden können und die Durchflussbedingungen im Vertikalprofil des Messvolumens 36 einheitlich sind. Der Strömungsverlauf im Messvolumen 36 wird nicht durch asymmetrische Anordnungen von Baueinheiten beeinträchtigt. Es sind jedoch zusätzliche optische Bauteile (Ablenkprismen) und damit verbundene Aufbauschritte erforderlich, um die Lichtstrahlablenkung zu realisieren.

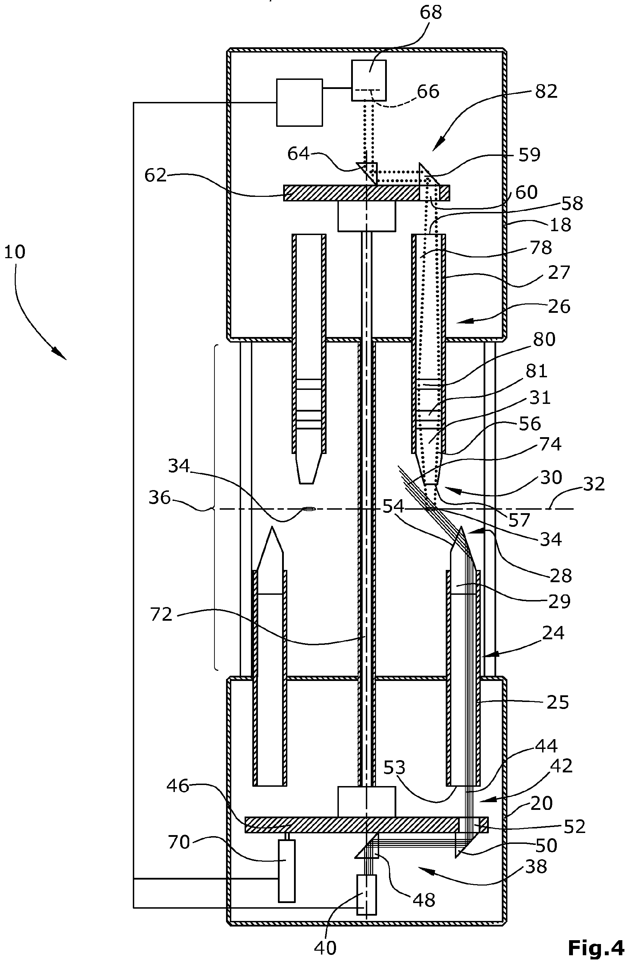

Fig. 4 zeigt ein zweites Ausführungsbeispiel der erfindungsgemäßen Messvorrichtung 10". Soweit deren Elemente jeweils denjenigen der Messvorrichtungen 10 und 10' der Fign. 2 und 3 gleichen (in Konstruktion und/oder Funktion), sind sie in Fig. 4 mit den gleichen Bezugszeichen wie in den Fign. 2 und 3 bezeichnet.

Der Unterschied der Messvorrichtung 10" zur Messvorrichtung 10' ist in der Realisierung der Ablenkung des Lichtstrahlbündels 42 zu sehen, was durch das Fensterelement 29 des Lichtleitelements 24 realisiert wird. Durch die steilen (60°) Strahlungswinkel zur Ausleuchtung des Erfassungsbereichs 34 wird eine maximale Vorlichtstreuung erzielt, ohne dass das Lichtstrahlbündel 42 in die Lichteintrittsfläche 57 fällt.

Das obere Ende des Fensterelements 29 (Laserstrahlaustritt) ist in zwei Flächen geteilt, die um 18° und 30° zueinander geneigt sind. Dabei ist die um 18° geneigte Fläche die (verspiegelte) Reflexionsfläche zur Umlenkung des Lichtstrahlbündels 42 und die um 30° geneigte Fläche die Lichtaustrittsfläche 54. Somit wird das Lichtstrahlbündel 42 um 60° vollständig durch den Erfassungsbereich 34 hindurch, jedoch an der Lichteintrittsfläche 57 vorbei geleitet. Gleichzeitig verhindert die Neigung der Lichtaustrittsfläche 54 ein gravitatives Absetzen von Schwebestoffen auf der Lichtaustrittsfläche 54.

Die Lichtleitelemente 24, 26 liegen bei der Ausführung mit geneigten Fensterflächen nicht parallel gegenüber sondern seitlich versetzt, um die Lichtführung realisieren zu können. Dieser Versatz kann durch Ausweichen der Positionierung der Lichtleitelemente 24 auf eine Kreislinie mit größerem Radius erfolgen (wie in Fig. 4 dargestellt), auf dem die unteren Lichtleitelemente 24 positioniert sind, oder auch durch einen Versatz auf dem gemeinsamen Positionsradius von oberen und unteren Lichtleitelementen 24, 26.

Der Vorteil der Lösung mit Fenstern besteht darin, dass keine weiteren optischen Bauelemente erforderlich sind und die Lichtstrahlablenkung vorteilhaft lediglich mit einem modifizierten Fensterelement 29 realisiert werden kann. Die Lichtleitelemente 24, 26 sind nicht symmetrisch gegenüber angeordnet, was die Durchflusssituation im Messvolumen 36 nachteilig beeinflussen kann.

### BEZUGSZEICHENLISTE

- 10: Messvorrichtung
- 10': Messvorrichtung
- 10": Messvorrichtung
- 12: Bohrloch
- 14: Erdreich
- 16: Tiefe
- 18: Packerelement/Abschottelement
- 20: Packerelement/Abschottelement
- 22: Streben
- 24: (Beleuchtungs-)Lichtleitelement
- 25: Fenstertubus
- 26: Lichtleitelement
- 27: Fenstertubus
- 28: Lichtstrahlbündel-Austrittsende
- 29: Fensterelement
- 30: Streulicht-Eintrittsende
- 31: Fensterelement
- 32: Messebene
- 34: Erfassungsbereich
- 36: Messvolumen
- 38: Beleuchtungseinheit
- 40: Belichtungsquelle
- 42: Lichtstrahlbündel
- 44: Lichtstrahlen
- 46: Drehteller
- 48: Umlenkprisma
- 50: Umlenkprismen
- 52: Öffnung
- 53: Lichteintrittsseite
- 54: Lichtaustrittsfläche
- 56: Streulicht
- 57: Lichteintrittsfläche
- 58: Lichtaustrittsseite
- 59: Umlenkprisma
- 60: Öffnung
- 62: Drehteller
- 64: Umlenkprisma
- 66: Bildaufnahmeebene
- 68: Kamera
- 70: Drehantrieb
- 72: Kopplungsstange
- 74: Durchlichtanteil
- 76: Unterdrückungselement
- 78: Auskoppellichtleiter
- 80: Achromaten
- 81: Achromaten
- 82: Pfad
- 84: Ablenkprisma, Prisma

## Patentansprüche

1. Verfahren zur optischen Erfassung von Fließbewegungen in flüssigen und/oder gasförmigen Medien, wobei bei dem Verfahren
- in dem Medium ein Messvolumen (36) sowie innerhalb des Messvolumens (36) mindestens eine Messebene (32) definiert werden und
- in Erstreckung der Messebene (32) sich bewegende Partikel optisch erfasst werden, indem
- die Messebene (32) in mindestens einem Erfassungsbereich (34) von der einen Seite der Messebene (32), das heißt von einer Beleuchtungsseite aus, mittels eines Lichtstrahlbündels (42) aus parallelen Lichtstrahlen einer Beleuchtungseinheit (38) belichtet und durchleuchtet wird,
- durch Partikel, die sich innerhalb des Erfassungsbereiches (34) der Messebene (32) befinden, Streulicht (56) erzeugt wird,
- das Lichtstrahlbündel (42) durch den Erfassungsbereich (34) der Messebene (32) hindurch und sein Durchlichtanteil (74) seitlich an mindestens einem Lichtleitelement (26) vorbei gerichtet ist, wobei als Vorlichtstreuung zu einer der Beleuchtungsseite gegenüberliegenden Vorlichtstreuungsseite abstrahlendes Streulicht (56) oder zumindest ein Teil davon durch das mindestens eine Lichtleitelement (26) zu der Bildaufnahmeebene (66) einer Kamera (68) geleitet wird, wobei das Lichtleitelement (26) mindestens ein dem Erfassungsbereich (34) der Messebene (32) zugewandtes Streulicht-Eintrittsende (30) aufweist, das mit einem für das Streulicht (56) transparenten Fensterelement (31) versehen ist, und wobei die Beleuchtungseinheit (38) mindestens ein Lichtstrahlbündel-Austrittsende (28) aufweist, das dem oder einem Erfassungsbereich (34) der Messebene (32) zugewandt ist sowie dem Streulicht-Eintrittsende (30) zugeordnet ist,
- von der Kamera (68) eine Sequenz von Bildern des Erfassungsbereiches (34) aufgenommen wird und
- anhand der Bildsequenz bezüglich mindestens eines Partikels durch rechnergestützte Bildauswertung ein Bewegungsvektor ermittelt wird.

2. Verfahren nach Anspruch 1, **dadurch gekennzeichnet, dass** innerhalb des Messvolumens (36) mehrere Messebenen (32) mit jeweils mindestens einem Erfassungsbereich (34) oder innerhalb einer Messebene (32) oder mindestens einer der Messebenen (32) mehrere Erfassungsbereiche (34) definiert werden, wobei jeder Erfassungsbereich (34) belichtet und durchleuchtet wird und wobei pro Erfassungsbereich (34) erzeugtes Streulicht (56) durch eine Sequenz von Bildern aufgenommen und durch pro Bildsequenz erfolgende Bildauswertung für jeweils mindestens einen Partikel ein Bewegungsvektor ermittelt wird.

3. Verfahren nach Anspruch 1 oder 2, **dadurch gekennzeichnet, dass** das Lichtstrahlbündel-Austrittsende (28) mit einem das Lichtstrahlbündel (42) seitlich austreten lassenden optischen Ablenkelement, insbesondere Prisma (84) versehen ist.

4. Vorrichtung zur optischen Erfassung von Fließbewegungen in flüssigen und/oder gasförmigen Medien, insbesondere zur Durchführung des Verfahrens nach einem der vorhergehenden Ansprüche, mit
- einem eine Messebene (32) aufweisenden beziehungsweise definierenden Messvolumen (36) zur Positionierung in dem zu untersuchenden Medium, wobei die Messebene (32) mindestens einen Erfassungsbereich (34) aufweist, innerhalb dessen im Medium befindliche Partikel optisch erfassbar sind,
- einer Beleuchtungseinheit (38) zur Belichtung des Erfassungsbereiches (34) mit einem im Wesentlichen parallelen Lichtstrahlbündel (42),
- einer Kamera (68) zur Erfassung von mindestens einem Teil des bei Belichtung von im Erfassungsbereich (34) befindlichen Partikeln entstehenden Streulichts (56),
- wobei die Bleuchtungseinheit (38) und die Kamera (68) zu entgegengesetzten Seiten der Messebene (32), nämlich auf einer Beleuchtungseite und einer Vorlichtstreuungsseite, angeordnet sind, und
- einem mindestens ein Lichtleitelement (26) aufweisenden optischen Pfad (82) zwischen dem Erfassungsbereich (34) und der Kamera (68) zum Leiten von ausschließlich Vorlichtstreuung oder zumindest eines Teils davon zu der Kamera (68), wobei die Beleuchtungseinheit (38) mindestens eine Lichtaustrittsfläche (54) und das mindestens eine Lichtleitelement (26) des optischen Pfads (82) mindestens eine Lichteintrittsfläche (57) aufweist und dass jeweils eine Lichtaustrittsfläche (54) seitlich versetzt zu einer Lichteintrittsfläche (57) sowie in einem Bereich zwischen diesen beiden Flächen (54, 57) ein Erfassungsbereich (34) der Messebene (32) angeordnet ist, wobei der Durchlichtanteil (74) des Lichtstrahlbündels (42) seitlich an der Lichteintrittsfläche (57) des mindestens eine Lichtleitelements (26) des optischen Pfads (82) vorbei gerichtet ist,
wobei die Kamera (68) dazu ausgelegt ist, eine Sequenz von Bildern des Erfassungsbereiches (34) aufzunehmen,
und wobei Mittel vorhanden sind, welche ausgelegt sind, anhand der Bildsequenz bezüglich mindestens eines Partikels durch rechnergestützte Bildauswertung einen Bewegungsvektor zu ermitteln.

5. Vorrichtung nach Anspruch 4, **dadurch gekennzeichnet, dass** die Lichtaustrittsfläche (54) der Beleuchtungseinheit (38) zur Messebene (32) geneigt ist und die Lichteintrittsfläche (57) des optischen Pfads (82) parallel zur Messebene (32) verläuft.

6. Vorrichtung nach Anspruch 4 oder 5, **dadurch gekennzeichnet, dass** die Lichtaustrittsfläche (54) eine Fläche eines optischen Ablenkelementes, insbesondere eines Prismas (84) ist.

7. Vorrichtung nach einem der Ansprüche 4 bis 6, **dadurch gekennzeichnet,**
- **dass** die Messebene (32) mehrere Erfassungsbereiche (34) aufweist,
- **dass** die Beleuchtungseinheit (38) eine Belichtungsquelle (40) und eine der Anzahl der Erfassungsbereiche (34) gleichende Anzahl an Lichtaustrittsflächen (54) aufweist,
- **dass** eine der Anzahl der Erfassungsbereiche (34) gleichende Anzahl an optischen Pfaden (82) mit Lichteintrittsflächen (57) vorgesehen ist und
- dass zwischen der Belichtungsquelle (40) und den Lichtaustrittsflächen (54) einerseits und zwischen den optischen Pfaden (82) und der Kamera (68) andererseits jeweils eine Lichtumlenkeinheit (48,50,59,64) zum Umlenken des Lichts der Belichtungsquelle (40) zum sequentiellen, insbesondere zyklisch sich wiederholenden Austritt aus den Lichtaustrittflächen (54) und zum sequentiellen, insbesondere zyklisch sich wiederholenden Umlenken des Lichts von den optischen Pfaden (82) zur Kamera (68) angeordnet ist, wobei die beiden Lichtumlenkeinheiten (48,50,59,64) synchronisiert sind.

8. Vorrichtung nach einem der Ansprüche 4 bis 7, **dadurch gekennzeichnet, dass** das Messvolumen (36) auf der Belichtungsseite und auf der Vorlichtstreuungsseite der Messebene (32) von jeweils einem Abschottelement (18,20) zur Unterdrückung von winklig zur Messebene (32) gerichteten Störströmungen begrenzt ist.

9. Vorrichtung nach Anspruch 8, **dadurch gekennzeichnet, dass**
- von dem ersten Abschottelement (20) für jeden Erfassungsbereich (34) der Messebene (32) ein erstes Beleuchtungslichtleitelement (24) mit einer Lichtaustrittsfläche (54) zum Leiten eines Lichtstrahlbündels (42) absteht und dass von dem zweiten Abschottelement (18) für jeden Erfassungsbereich (34) ein zweites Lichtleitelement (26) absteht, dass eine Lichteintrittsfläche (57) für Streulicht (56) aus dem jeweiligen Erfassungsbereich (34) aufweist und zumindest einen Abschnitt des zur Kamera (68) führenden optischen Pfades (82) bildet, wobei die Lichtaustrittsflächen (57) und die Lichteintrittsflächen (54) unter Anordnung jeweils eines Erfassungsbereiches (34) in einem Bereich zwischen diesen positioniert sind,
oder
- die Lichtleitelemente (24,26) zu ihren die Lichtaustritts- bzw. Lichteintrittsflächen (54,57) aufweisenden Enden (28,30) hin konisch verjüngt ausgebildet sind und/oder optische Ablenkelemente, insbesondere Prismen (84) aufweisen.

10. Vorrichtung nach Anspruch 8 oder 9, **dadurch gekennzeichnet, dass** die Beleuchtungseinheit (38) in oder an dem einen Abschottelement (20) angeordnet ist und dass die Kamera (68), der optische Pfad (82) in oder an dem anderen Abschottelement (18) angeordnet bzw. ausgebildet sind.

11. Vorrichtung nach einem der Ansprüche 4 bis 10, **dadurch gekennzeichnet, dass** das Messvolumen mit parallel zu den Lichtleitelementen verlaufenden Verstrebungen (22) ausgeführt ist, die das Messvolumen vom oberen zum unteren Abschottelement (18,20) durchziehen und in möglichst äquidistanten Abständen zueinander und zu den Lichtleitelementen (26) auf der gesamten Basisfläche der Abschottelemente verteilt angeordnet sind.

## Claims

1. A method for optically detecting flow movements in liquid and/or gaseous media, wherein in this method
- a measuring volume (36) is defined in the medium and at least one measuring plane (32) is defined within the measuring volume (36), and
- particles moving in the extension of the measuring plane (32) are optically detected, in that
- the measuring plane (32) is exposed to light and is illuminated in at least one detection area (34) from the one side of the measuring plane (32), that is from a lighting side, by means of a light beam bundle (42) of parallel light beams of a lighting unit (38),
- scattered light (56) is generated by means of particles within the detection area (34) of the measuring plane (32),
- the light beam bundle (42) is directed through the detection area (34) of the measuring plane (32) and its transmitted light proportion (74) is directed laterally past at least one light guiding element (26), wherein scattered light (56) or at least a portion thereof, radiating as a pre-light scattering to a pre-light scattering side facing one of the lighting sides, is guided through the at least one light guiding element (26) to the image capturing plane (66) of a camera (68), wherein the light guiding element (26) comprises at least one scattered light entry end (30) facing the detection area (34) of the measuring plane (32) and is provided with a transparent window element (31) for the scattered light (56), and wherein the lighting unit (38) comprises at least one light beam bundle exit end (28) facing the detection area (34) of the measuring plane (32) and assigned to the scattered light entry end (30),
- the camera (68) captures a sequence of images of the detection area (34), and
- an image sequence is used to determine a motion vector with regard to at least one particle by means of computer-aided image evaluation.

2. The method according to claim 1, **characterized in that** several measuring planes (32) within the measuring volume (36) are defined with respectively at least one detection area (34), or **in that** several detection areas (34) are defined within a measuring plane (32) or within at least one of the measuring planes (32), wherein each detection area (34) is exposed to light and is illuminated, and wherein scattered light (56) generated per detection area (34) is captured by a sequence of images, and a motion vector is determined by image evaluation per image sequence for respectively at least one particle.

3. The method according to claim 1 or 2, **characterized in that** the light beam bundle exit end (28) is provided with an optical deflector, particularly a prism (84), which allows the light beam bundle (42) to exit laterally.

4. A device for optically detecting flow movements in liquid and/or gaseous media, particularly for performing the method according to one of the preceding claims, comprising
- a measuring volume (36) comprising or defining a measuring plane (32) for positioning in the medium to be examined, wherein the measuring plane (32) comprises at least one detection area (34) within which particles in the medium can be optically detected,
- a lighting unit (38) for exposing the detection area (34) to light with a substantially parallel light beam bundle (42),
- a camera (68) for capturing at least a portion of the scattered light (56) that occurs when exposing particles in the detection area (34) to light,
- wherein the light ing unit (38) and the camera (68) are arranged on opposing sides of the measuring plane (32), namely on a lighting side and a pre-light scattering side, and
- an optical path (82) comprising at least one light guiding element (26) between the detection area (34) and the camera (68) for guiding only pre-light scattering or at least a portion thereof to the camera (68), wherein the lighting unit (38) comprises at least one light exit surface (54) and the at least one light guiding element (26) of the optical path (82) comprises at least one light entry surface (57), and wherein respectively one light exit surface (54) is laterally offset to a light entry surface (57), and a detection area (34) of the measuring plane (32) is arranged in an area between these two surfaces (54, 57), wherein the transmitted light proportion (74) of the light beam bundle (42) is laterally directed past the light entry surface (57) of the at least one light guiding element (26) of the optical path (82), wherein the camera (68) is adapted to capture a sequence of images of the detection area (34), and wherein there are means adapted to detect, by means of the image sequence, a motion vector with regard to at least one particle by means of computer-aided image evaluation.

5. The device according to claim 4, **characterized in that** the light exit surface (54) of the lighting unit (38) is inclined toward the measuring plane (32), and **in that** the light entry surface (57) of the optical path (82) is parallel to the measuring plane (32).

6. The device according to claim 4 or 5, **characterized in that** the light exit surface (54) is a surface of an optical deflector, particularly of a prism (84).

7. The device according to any one of claims 4 to 6, **characterized in that**
- the measuring plane (32) comprises several detection areas (34),
- the lighting unit (38) comprises a light exposure source (40) and a number of light exit surfaces (54) equal to the number of detection areas (34),
- a number of optical paths (82) equal to the number of detection areas (34) is provided with light entry surfaces (57), and
- on the one hand between the light exposure source (40) and the light exit surfaces (54) and on the other hand between the optical paths (82) and the camera (68), respectively one light deflection unit (48, 50, 59, 64) is arranged for deflecting the light or the light exposure source (40) for a sequentially, particularly cyclically repeating exit from the light exit surfaces (54), and for a sequentially, particularly cyclically repeating deflection of the light from the optical paths (82) to the camera (68), wherein the two light deflection units (48, 50, 59, 64) are synchronized.

8. The device according to any one of claim 4 to 7, **characterized in that** the measuring volume (36) is limited on the light exposure side and on the pre-light scattering side of the measuring plane (32) by respectively one isolation element (18, 20) for suppressing interfering flows directed at an angle to the measuring plane (32).

9. The device according to claim 8, **characterized in that**
- a first lighting light guiding element (24) with a light exit surface (54) for guiding a light beam bundle (42) is protruding from the first isolation element (20) for each detection area (34) of the measuring plane (32), and **in that** a second light guiding element (26) is protruding from the second isolation element (18) for each detection area (34) and comprises a light entry surface (57) for scattered light (56) from the respective detection area (34) and forms at least a portion of the optical path (82) leading to the camera (68), wherein the light exit surfaces (57) and the light entry surfaces (54) are positioned between respectively one arranged detection area (34),
or
- the light guiding elements (24, 26) are conically tapered to their ends (28, 30), which comprise light exit surfaces and light entry surfaces (54, 57), and/or comprise optical deflectors, particularly prisms (84).

10. The device according to claim 8 or 9, **characterized in that** the lighting unit (38) is arranged in or at an isolation element (20), and **in that** the camera (68) and the optical path (82) are arranged or formed in or at the other isolation element (18).

11. The device according to any one of claims 4 to 10, **characterized in that** the measuring volume is provided with struts (22) running parallel to the light guiding elements, which extend the measuring volume from the upper to the lower isolation element (18, 20) and are arranged as equidistant as possible to each other and to the light guiding elements (26) distributed over the entire base surface of the insolation elements.

## Revendications

1. Procédé de saisie optique d'écoulements dans des milieux liquides et/ou gazeux, dans lequel, lors du procédé
- dans le milieu, un volume de mesure (36) ainsi qu'au moins un plan de mesure (32) à l'intérieur du volume de mesure (36) sont définis et
- des particules se mouvant dans l'étendue du plan de mesure (32) sont saisies optiquement, où
∘ le plan de mesure (32) est illuminé et passé au crible au moyen d'un faisceau lumineux (42) de rayons lumineux parallèles d'une unité d'éclairage (38) dans au moins une zone de saisie (34) de l'un côté du plan de mesure (32) qui est le côté d'éclairage,
∘ une lumière diffusée (56) est obtenue par les particules se trouvant à l'intérieur de la zone de saisie (34) du plan de mesure (32),
∘ le faisceau lumineux (42) est dirigé à travers la zone de saisie (34) du plan de mesure (32) et sa fraction de lumière transmise est dirigée latéralement sur au moins un élément de guidage de lumière (26), dans lequel une lumière diffusée (56) ou au moins une fraction de celle-ci est guidée par l'au moins un élément de guidage de lumière (26) au plan de prise de vue (66) d'une caméra (68) en tant que prédiffusion lumineuse à un côté de prédiffusion lumineuse opposé au côté d'éclairage, dans lequel l'élément de guidage de lumière (26) comporte au moins une extrémité d'entrée de la lumière diffusée (30) faisant face à la zone de saisie (34) du plan de mesure (32), prévue avec un élément de fenêtre (31) transparent pour la lumière diffusée (56), et dans lequel l'unité d'éclairage (38) comporte au moins une extrémité de sortie du faisceau lumineux (28), laquelle fait face à la ou à une zone de saisie (34) du plan de mesure (32) et est ordonnée à l'extrémité d'entrée de la lumière diffusée (30),
o une séquence d'images de la zone de saisie (34) est capturée par la caméra (68) et
o un vecteur de mouvement est déterminé par rapport à au moins une particule à l'aide de la séquence d'images par analyse d'images informatisée.

2. Procédé selon la revendication 1, **caractérisé en ce que** sont définis plusieurs plans de mesure (32) avec respectivement au moins une zone de saisie (34) à l'intérieur du volume de mesure (36) ou plusieurs zones de saisie (34) à l'intérieur d'un plan de mesure (32) ou d'au moins un des plans de mesure (32), dans lequel chaque zone de saisie (34) est illuminée et passée au crible et dans lequel la lumière diffusée (56) produite par chaque zone de saisie (34) est capturée par une séquence d'image et un vecteur de mouvement est déterminé pour l'au moins une particule respective par analyse d'images de chaque séquence d'images résultante.

3. Procédé selon la revendication 1 ou 2, **caractérisé en ce que** l'extrémité de sortie du faisceau lumineux (28) est prévue avec un élément déflecteur optique laissant passer latéralement le faisceau lumineux (42), en particulier un prisme (84).

4. Dispositif de saisie optique d'écoulements dans des milieux liquides et/ou gazeux, en particulier pour la mise en œuvre du procédé selon l'une des revendications précédentes, comprenant
- un volume de mesure (36) défini et comportant un plan de mesure (32) pour positionnement dans le milieu à examiner, dans lequel le plan de mesure (32) comporte au moins une zone de saisie (34), à l'intérieur de laquelle une particule se trouvant dans le milieu peut être saisie optiquement,
- une unité d'éclairage (38) pour illuminer la zone de saisie (34) avec un faisceau lumineux (42) sensiblement parallèle,
- une caméra (68) pour saisir au moins une partie de la lumière diffusée (56) résultant de l'illumination des particules se trouvant dans la zone de saisie (34),
- dans lequel l'unité d'éclairage (38) et la caméra (68) sont agencées sur des côtés opposés du plan de mesure (32), à savoir sur un côté d'illumination et sur un côté de prédiffusion lumineuse, et
- un chemin optique (82) comprenant au moins un élément de guidage de lumière (26) entre la zone de saisie (34) et la caméra (68) pour le guidage de la prédiffusion lumineuse ou d'au moins une partie de celle-ci vers la caméra (68), dans lequel l'unité d'éclairage (38) comporte au moins une surface de sortie de lumière (54) et l'au moins un élément de guidage de lumière (26) du chemin optique (82) comporte au moins une surface d'entrée de lumière (57) et une surface de sortie de lumière (54) est respectivement agencée en décalage latéral par rapport à une surface d'entrée de lumière (57) de même qu'une zone de saisie (34) du plan de mesure (32) est agencée dans une zone entre ces deux surfaces (54, 57), dans lequel la fraction de lumière transmise (74) du faisceau lumineux (42) est dirigée latéralement sur la surface d'entrée de lumière (57) de l'au moins un élément de guidage de lumière (26) du chemin optique (82), dans lequel la caméra (68) est disposée de façon à capturer une séquence d'images de la zone de saisie (34), et dans lequel il existe des moyens disposés pour déterminer un vecteur de mouvement par rapport à au moins une particule à l'aide de la séquence d'images par analyse d'images informatisée.

5. Dispositif selon la revendication 4, **caractérisé en ce que** la surface de sortie de lumière (54) de l'unité d'éclairage (38) est inclinée par rapport au plan de mesure (32) et la surface d'entrée de lumière (57) du chemin optique (82) est parallèle au plan de mesure (32).

6. Dispositif selon la revendication 4 ou 5, **caractérisé en ce que** la surface de sortie de lumière (54) est une surface d'un élément déflecteur optique, en particulier d'un prisme (84).

7. Dispositif selon l'une des revendications 4 à 6, **caractérisé**
- **en ce que** le plan de mesure (32) comporte plusieurs zones de saisie (34),
- **en ce que** l'unité d'éclairage (38) comporte une source d'éclairage (40) et un nombre de surfaces de sortie de lumière (54) égal au nombre de zones de saisie (34),
- **en ce qu'**est prévu un nombre de chemins optiques (82) comprenant des surfaces d'entrée de lumière (57) égal au nombre de zones de saisie (34) et
- **en ce qu'**entre la source d'éclairage (40) et les surfaces de sortie de lumière (54) d'un côté et entre les chemins optiques (82) et la caméra (68) de l'autre côté est agencé respectivement une unité de déviation de lumière (48, 50, 59, 64) pour dévier la lumière de la source d'éclairage (40) pour une sortie hors des surfaces de sortie de lumière (54) séquentielle, en particulier se répétant cycliquement, et pour une déviation séquentielle, en particulier se répétant cycliquement, de la lumière des chemins optiques (82) à la caméra (68), dans lequel les deux unités de déviation de lumière (48, 50, 59, 64) sont synchronisées.

8. Dispositif selon l'une des revendications 4 à 7, **caractérisé en ce que** le volume de mesure (36) est délimité sur le côté d'illumination et sur le côté de prédiffusion lumineuse du plan de mesure (32) par un élément obturateur (18, 20) respectif pour la suppression de courant parasites dirigés de façon angulaire par rapport au plan de mesure (32).

9. Appareil selon la revendication 8, **caractérisé en ce**
- **qu'**un premier élément de guidage de lumière (24) comprenant une surface de sortie de lumière (54) dépasse du premier élément obturateur (20) pour chaque zone de saisie (34) du plan de mesure (32) afin de guider un faisceau lumineux (42) et en ce qu'un deuxième élément de guidage de lumière (26) dépasse du deuxième élément obturateur (18) pour chaque zone de saisie (34), comporte une surface d'entrée de lumière (57) pour la lumière diffusée (56) venant de la zone de saisie (34) respective et forme au moins une section du chemin optique (82) menant vers la caméra (68), dans lequel les surfaces de sortie de lumière (57) et les surfaces d'entrée de lumière (54) sont positionnées pour qu'une zone de saisie respective (34) soit agencée dans l'intervalle entre celles-ci,
ou
- les éléments de guidage de lumière (24, 26) sont réalisés en se rétrécissant de manière conique à leurs extrémités (28, 30) comportant les surfaces d'entrée ou de sortie de lumière (54, 57) et/ou comportent des éléments déflecteurs optiques, en particulier des prismes (84).

10. Dispositif selon la revendication 8 ou 9, **caractérisé en ce que** l'unité d'éclairage (38) est agencée à ou dans un des éléments obturateurs (20) et **en ce que** la caméra (68), le chemin optique (82) sont agencés ou conçus dans ou sur l'autre élément obturateur (18) .

11. Dispositif selon l'une des revendications 4 à 10, **caractérisé en ce que** le volume de mesure est réalisé avec des entretoises (22) parallèles aux éléments de guidage de lumière, lesquelles traversent le volume de mesure de l'élément obturateur supérieur (18) à l'élément obturateur inférieur (20) et sont réparties sur la surface de base commune des éléments obturateurs à écarts aussi équidistants que possible l'une de l'autre et par rapport aux éléments de guidage de lumière (26).
